# EUROPEAN PATENT APPLICATION

(11) **EP 3 115 872 A1**
(43) Date of publication of application: **11.01.2017**
(21) Application number: 15758255.2
(22) Date of filing: 03.03.2015
(51) Int. Cl.: G06F 3/01, B60T 7/04, B60K 26/00

(54) **APPARATUS, SYSTEM, AND METHOD FOR CONTROLLING DEVICE**

(30) Priority: 04.03.2014 KR 20140025766; 09.06.2014 KR 20140069753; 06.11.2014 KR 20140153931; 08.01.2015 KR 20150002362; 23.02.2015 KR 20150025479
(71) Applicant: Park, Hyeon Soo, Seoul 138-892 (KR)
(72) Inventor: PARK, Hyeon Soo, Seoul 138-892 (KR)
(74) Representative: Algemeen Octrooi- en Merkenbureau B.V.
(86) International application number: PCT/KR2015/002049
(87) International publication number: WO 2015/133797

(57) **Abstract**

Provided is a device control apparatus including a first instrument push apparatus and a touch sensing portion operated by an operation of a user and a controller which controls an operation of a user device based on operations by the first instrument push apparatus and the touch sensing portion. The controller outputs sensing commands with respect to the operations with respect to the first instrument push apparatus and the touch sensing portion. Here, a first sensing command is output by sensing the operation with respect to the first instrument push apparatus, and a second sensing command is output by sensing the operation with respect to the touch sensing portion.

## Description

### [Technical Field]

The present invention relates to an apparatus, a system, and a method for controlling a device, and more particularly, to an apparatus, system, and method for controlling an operation of a user device such as a vehicle and a personal computer using various interface units.

### [Background Art]

An interface unit in a configuration which sends data and commands to an electronic device such as a computer includes a mouse for inputting data or commands by moving a cursor or icon on a computer screen, a keyboard which includes a plurality of keys corresponding to letters and functions, a joystick which commands a movement of an object or character in a videogame, etc., and a microphone for converting a sound into an electric signal to input.

Due to fast growth of wireless communication networks and robot engineering, driverless cars or robots have been developed and various interface units for inputting or transmitting data and commands for them have been required. However, not only new type wearable devices but also generally used mouses and joysticks, etc. have limitations in coupling with various automated systems beyond general computers or simple game consoles.

As an example, in the case of a control interface for a vehicle, an input device for controlling the vehicle includes an accelerator pedal or a brake pedal, which has a limitation in providing various input methods for transmitting a user command to control an operation of the vehicle.

For example, brakes are devices for stopping a movement of an engine or machine or reducing a speed thereof. Particularly, brakes of a vehicle are classified into a service brake, a parking brake, an auxiliary brake, etc. The service brake is used to reduce a driving speed of the vehicle or to stop the vehicle suddenly as necessary. The service brake is referred to as a foot brake since a driver operates with a foot or referred to as a main brake since being mainly used to decelerate the vehicle. The parking brake provides a braking force for preventing a movement of the vehicle while being parked. In general, since being located on a side of a driver, the parking brake is referred to as a side brake. The auxiliary brake is a brake for protecting friction brakes such as the service brake and parking brake and increasing a braking effect to decelerate while going down on a long slope way or driving at a high speed and includes an exhaust brake, an eddy current brake, an engine brake, etc. Also, to increase drivers' convenience, a cruise control function has been developed. Cruise control is a technology of helping drivers in driving while maintaining preset speeds even when drivers do not operate accelerator pedals.

However, conventional operation devices used in vehicles described above do not provide various types of interfaces to users.

As a prior technology related to the present invention, Korean Patent Publication No. 10-2014-0143034 (December 15, 2014) discloses a method for providing service based on a multimodal input and an electronic device thereof.

### [Disclosure]

### [Technical Problem]

In general, it is necessary for a driver to continuously apply a constant pedal effort to a service brake pedal to maintain a stop state of a vehicle when the vehicle stops for a while due to a stop sign while driving the vehicle.

However, when a time for waiting at a red light increases due to traffic congestion or worsening weather, etc., it is necessary for the driver to continuously step on the service brake pedal or to operate a parking brake. When the pedal effort for stepping on the service brake pedal is not maintained, there is present a risk that the vehicle moves forward or is moved backward on a slope way. Also, it is very inconvenient for the driver to operate the parking brake at every red light.

Particularly, since it is necessary to deeply pressurize the service brake pedal to maintain a stop state, giving a great force in operating is very inconvenient for the elderly and infirm or women.

Also, a need for a technology which allows drivers to conveniently and simply operate a driving speed of the vehicle while drivers use a general cruise control function is increased.

Also, in general, since it is necessary to use a certain method of locating a pointer of a mouse in a desired interface area and clicking a button thereof to operate a computer, a need for various operation methods for operating functions that users want is increased.

Therefore, it is an aspect of the present invention to provide an apparatus, system, and method for controlling a device, capable of operating an operation of a user device such as a vehicle and computer using a button of an interface unit and a touch operation.

It is another aspect of the present invention to provide an apparatus, system, and method for controlling a device, capable of corresponding to a complicated control function of an electronic device such as a computer by diversifying an operation method using a button device.

It is another aspect of the present invention to provide an apparatus, system, and method for controlling a device, capable of being applied to a mouse including only one button.

It is another aspect of the present invention to provide an apparatus, system, and method for controlling a device, which allow the disabled who can use only one hand to easily control various devices by combining a button input method allowing various function to be controlled using only one hand with a control method using a touch.

### [Technical Solution]

One aspect of the present invention provides a device control apparatus including a first instrument push apparatus and a touch sensing portion operated by an operation of a user and a controller which controls an operation of a user device based on operations by the first instrument push apparatus and the touch sensing portion. Here, the controller outputs sensing commands with respect to the operations on the first instrument push apparatus and the touch sensing portion while outputting a first sensing command by sensing the operation with respect to the first instrument push apparatus and outputting a second sensing command by sensing the operation with respect to the touch sensing portion.

The controller may control a preset corresponding function of a corresponding operation portion included in the user device to be operated when the first sensing command and the second sensing command are output.

The device control apparatus may include a first instrument push sensing portion which senses a push pressure to the first instrument push apparatus. Here, the controller may output the first sensing command when the push pressure to the first instrument push apparatus, sensed by the first instrument push sensing portion, is maintained at a preset reference intensity or higher or is maintained for a reference time, and the controller may output the second sensing command when the first sensing command is output and then a touch sensed by the touch sensing portion occurs as many as a preset reference number or occurs for a reference time.

The device control apparatus may include a second instrument provided at or connected to the user device. Here, the touch sensing portion may include a second instrument touch portion which senses a touch to the second instrument, and the second sensing command may be output when the touch to the second instrument, sensed by the second instrument touch portion, occurs as many as a preset reference number or occurs for a reference time.

The touch sensing portion may include a first instrument push apparatus touch portion which senses a touch to the first instrument push apparatus, and the second sensing command may be output when the touch to the first instrument push apparatus touch portion, sensed by the first instrument push apparatus touch portion, occurs as many as a preset reference number or occurs for a reference time.

The device control apparatus may include a first instrument push sensing portion which senses a push pressure to the first instrument push apparatus. Here, the touch sensing portion may include a first instrument push apparatus touch portion which senses a touch to the first instrument push apparatus, the controller may output the first sensing command when the push pressure to the first instrument push apparatus, sensed by the first instrument push sensing portion, is maintained at a preset reference intensity or higher or maintained for a reference time and then the touch to the first instrument push apparatus, sensed by the first instrument push apparatus touch portion, occurs for a reference time, and the controller may output the second sensing command when the first sensing command is output and then a touch sensed by the touch sensing portion occurs as many as a preset reference number or occurs for a reference time.

The device control apparatus may include a second instrument provided at or connected to the user device. Here, the touch sensing portion may include a second instrument touch portion which senses a touch to the second instrument, and the second sensing command may be output when the touch to the second instrument, sensed by the second instrument touch portion, occurs as many as a preset reference number or occurs for a reference time.

The touch sensing portion may include a first instrument push apparatus second touch portion which senses a touch to the first instrument push apparatus, and the second sensing command may be output when an additional touch to the first instrument push apparatus, sensed by the first instrument push apparatus second touch portion, occurs as many as a preset reference number or occurs for a reference time.

The touch sensing portion may include a first instrument push apparatus touch portion which senses a touch to the first instrument push apparatus. Here, the controller may output the first sensing command when the touch to the first instrument push apparatus, sensed by the first instrument push apparatus touch portion, occurs for a preset reference time, and the controller may output the second sensing command when the first sensing command is output and then a touch sensed by the touch sensing portion occurs as many as a preset reference number or occurs for a reference time.

The device control apparatus may include a second instrument provided at or connected to the user device. Here, the touch sensing portion may include a second instrument touch portion which senses a touch to the second instrument and the second sensing command may be output when the touch to the second instrument, sensed by the second instrument touch portion, occurs as many as a preset reference number or occurs for a reference time.

The touch sensing portion may include a first instrument push apparatus second touch portion which senses a touch to the first instrument push apparatus, and the second sensing command may be output when the touch sensed by the first instrument push apparatus second touch portion, occurs as many as a preset reference number or occurs for a reference time.

The first instrument push apparatus touch portion and the first instrument push apparatus second touch portion may be formed as identical touch portions or separate touch portions.

The controller may sense an operation with respect to the touch sensing portion to output the second sensing command when the first sensing command is output.

The device control apparatus may further include a display portion which displays a signal informing an operation of the corresponding function when the preset corresponding function is operated. Here, the display portion may operate when the corresponding function is operated.

The display portion may be at least one of electronic devices provided at the first instrument push apparatus, the second instrument, and the user device and an electronic device connected to the user device through wires or wirelessly, and the signal displayed on the display portion may be at least one of a movement, a sound, vibrations, light emission, and visual display.

The user device may be a vehicle, the first instrument push apparatus may be a brake pedal, and the second instrument may include at least one of an accelerator pedal, a footrest, a clutch, an overhead console, a door trim, a center fascia, a dashboard, and an instrument mounted on the dash board.

The first instrument push sensing portion which senses to allow the controller to output the first sensing command may be a brake pedal sensing portion which senses a push operation to the brake pedal, and the second instrument touch portion which senses to allow the controller to output the second sensing command may include a touch sensor which senses a touch to the second instrument.

The corresponding operation portion may be a parking brake, an operation of the corresponding function may be operating the parking brake by controlling a driving portion of the parking brake, and the corresponding function may be operated in a stop-process state in which the vehicle is stopping or stoppable.

The controller may determine the stop-process state in which the vehicle is stopping or stoppable when a speed of the vehicle is a preset reference speed or lower.

The device control apparatus may include a display portion which displays a signal informing an operation of the corresponding function. Here, the controller may operate the parking brake, the display portion which displays the operation of the corresponding function may be the brake pedal, and it may be moving the brake pedal to a position relatively downward from a position where the brake pedal is operated that the display portion displays the signal informing the operation of the corresponding function.

When the second sensing command is output due to operating the second instrument while the parking brake is operated, the controller may release the parking brake by controlling the driving portion of the parking brake.

The user device may be a vehicle, the first instrument push apparatus may be an accelerator pedal, and the second instrument may include at least one of a brake pedal, a footrest, a clutch, an overhead console, a door trim, a center fascia, a dashboard, and an instrument mounted on the dash board.

The first instrument push sensing portion which senses to allow the controller to output the first sensing command may be an accelerator pedal sensing portion which senses a push operation to the accelerator pedal, and the second instrument touch portion which senses to allow the controller to output the second sensing command may include a touch sensor which senses a touch to the second instrument.

The corresponding operation portion may be a cruise control device, an operation of the corresponding function may be operating a cruise control function by controlling a driving portion of the cruise control device, and the corresponding function may be operated while the vehicle is driven at a predetermined speed or higher.

The controller may reduce a speed of the vehicle when the first sensing command is output due to operating the accelerator pedal after the cruise control function is operated and may increase the speed of the vehicle when the second sensing command is output due to operating the second instrument.

The controller may increase a speed of the vehicle when the first sensing command is output due to operating the accelerator pedal after the cruise control function is operated and may reduce the speed of the vehicle when the second sensing command is output due to operating the second instrument.

The controller may control a level of increasing or reducing the speed of the vehicle to be different based on a number of outputting the first sensing command or the second sensing command.

The controller may disable the cruise control function by controlling the driving portion of the cruise control device when the second sensing command is output due to operating the second instrument while the cruise control function is operated.

The user device may be a computer and the first instrument push apparatus may be a first button of a first device provided at or connected to the computer through wires or wirelessly. Here, the second instrument may be provided at the first device, the second instrument may include at least one of a second button, a wheel, and a first device touch area portion that is a designated area of an outside of the first device, which senses a touch, and the first instrument push sensing portion may be a first button push sensing portion which senses a push operation to the first button and the second instrument touch portion may include a touch sensor which senses a touch to the second instrument.

The user device may be a computer and the first instrument push apparatus may be a first button of a first device provided at or connected to the computer through wires or wirelessly. Here, the second instrument may be provided at a second device provided at or connected to the computer through wires or wirelessly, separately from the first device, the second instrument may include at least one of a second button, a wheel, and a second device touch area portion that is a designated area of an outside of the second device, which senses a touch, and the first instrument push sensing portion may be a first button push sensing portion which senses a push operation to the first button and the second instrument touch portion may include a touch sensor which senses a touch to the second instrument.

The user device may be a computer and the first instrument push apparatus may be a first button of a first device provided at or connected to the computer through wires or wirelessly, the first instrument push apparatus touch portion may be provided at the first button, and the first instrument push sensing portion may be a first button push sensing portion which senses a push operation to the first button and the first instrument push apparatus touch portion may include a touch sensor which senses a touch to the first button that is the first instrument push apparatus.

The user device may be a computer and the first instrument push apparatus may be a first button of a first device provided at or connected to the computer through wires or wirelessly. Here, the first instrument push apparatus touch portion may be provided at the first button, the second instrument may be provided at the first device, the second instrument may include at least one of a second button, a wheel, and a first device touch area portion that is a designated area of an outside of the first device, which senses a touch, the first instrument push sensing portion may be a first button push sensing portion which senses a push operation to the first button and the first instrument push apparatus touch portion may include a touch sensor which senses a touch to the first button that is the first instrument push apparatus, and the second instrument touch portion may include a touch sensor which senses a touch to the second instrument.

The user device may be a computer and the first instrument push apparatus may be a first button of a first device provided at or connected to the computer through wires or wirelessly. Here, the first instrument push apparatus touch portion may be provided at the first button, the second instrument may be provided at a second device provided at or connected to the computer through wires or wirelessly, separately from the first device, the second instrument may include at least one of a second button, a wheel, and a second device touch area portion that is a designated area of an outside of the second device, which senses a touch, the first instrument push sensing portion may be a first button push sensing portion which senses a push operation to the first button and the first instrument push apparatus touch portion may include a touch sensor which senses a touch to the first button that is the first instrument push apparatus, and the second instrument touch portion may include a touch sensor which senses a touch to the second instrument.

The user device may be a computer and the first instrument push apparatus may be a first button of a first device provided at or connected to the computer through wires or wirelessly. Here, the first instrument push apparatus touch portion and the first instrument push apparatus second touch portion may be provided at the first button, and the first instrument push sensing portion may be a first button push sensing portion which senses a push operation to the first button and the first instrument push apparatus touch portion and the first instrument push apparatus second touch portion may include touch sensors which sense additional touches to the first button that is the first instrument push apparatus.

The user device may be a computer and the first instrument push apparatus may be a first button of a first device provided at or connected to the computer through wires or wirelessly. Here, the first instrument push apparatus touch portion may be provided at the first button, the second instrument may be provided at the first device, the second instrument may include at least one of a second button, a wheel, and a first device touch area portion that is a designated area of an outside of the first device, which senses a touch, the first instrument push apparatus touch portion may include a touch sensor which senses a touch to the first button that is the first instrument push apparatus, and the second instrument touch portion may include a touch sensor which senses a touch to the second instrument.

The user device may be a computer and the first instrument push apparatus may be a first button of a first device provided at or connected to the computer through wires or wirelessly. Here, the first instrument push apparatus touch portion may be provided at the first button, the second instrument may be provided at a second device provided at or connected to the computer through wires or wirelessly, separately from the first device, the second instrument may include at least one of a second button, a wheel, and a second device touch area portion that is a designated area of an outside of the second device, which senses a touch, the first instrument push apparatus touch portion may include a touch sensor which senses a touch to the first button that is the first instrument push apparatus, and the second instrument touch portion may include a touch sensor which senses a touch to the second instrument.

The user device may be a computer and the first instrument push apparatus may be a first button of a first device provided at or connected to the computer through wires or wirelessly. Here, the first instrument push apparatus touch portion and the first instrument push apparatus second touch portion may be provided at the first button, and the first instrument push apparatus touch portion and the first instrument push apparatus second touch portion may include touch sensors which sense additional touches to the first button that is the first instrument push apparatus.

The first device may be a mouse and the first button that is the first instrument push apparatus may be a first mouse button of the mouse, the first button push sensing portion may be a first mouse button push sensing portion which senses a push to the first mouse button, the second button may be a second mouse button of the mouse, the wheel may be a mouse wheel, and the first device touch area portion may be a designated area of an outside of the first mouse, which correspond to at least one of the second instrument. When the controller determines that the first sensing command is output due to the push operation given to the first mouse button and the second sensing command is output due to a touch operation to the second instrument, the corresponding function may be operated.

The first device may be a first mouse and the first button that is the first instrument push apparatus may be a first mouse button of the first mouse. Here, the first button push sensing portion may be a first mouse button push sensing portion which senses a push to the first mouse button, the second device may be a second mouse separate from the first mouse, the second instrument may be provided at the second mouse, the second button may be a second mouse button of the second mouse, the wheel may be a mouse wheel of the second mouse, and the second device touch area portion may be a designated area of an outside of the second mouse, which correspond to at least one of the second instrument. When the controller determines that the first sensing command is output due to the push operation given to the first mouse button, and with this, the second sensing command is output due to a touch operation to the second instrument, the corresponding function may be operated.

The first device may be a mouse and the first button that is the first instrument push apparatus may be a mouse button of the mouse. Here, the first button push sensing portion may be a mouse button push sensing portion which senses a push to the mouse button, the first instrument push apparatus touch portion provided at the mouse button may include the touch sensor which senses the touch to the mouse button. When the controller determines that the first sensing command is output due to the push operation given to the mouse button, and with this, the second sensing command is output due to a touch operation to the mouse button, the corresponding function may be operated.

The first device may be a mouse and the first button that is the first instrument push apparatus may be a first mouse button of the mouse. Here, the first button push sensing portion may be a first mouse button push sensing portion which senses a push to the first mouse button, the first instrument push apparatus touch portion provided at the first mouse button may include the touch sensor which senses a touch to the first mouse button, the second button may be a second mouse button of the mouse, the wheel may be a mouse wheel, and the first device touch area portion may be a designated area of an outside of the first mouse, which correspond to at least one of the second instrument. When the controller determines that the first sensing command is output due to a touch operation after giving the push operation to the first mouse button, and with this, the second sensing command is output due to a touch operation to the second instrument, the corresponding function may be operated.

The first device may be a first mouse and the first button that is the first instrument push apparatus may be a first mouse button of the first mouse. Here, the first button push sensing portion may be a first mouse button push sensing portion which senses a push to the first mouse button, the first instrument push apparatus touch portion provided at the first mouse button may include the touch sensor which senses a touch to the first mouse button, the second device may be a second mouse separate from the first mouse, the second instrument may be provided at the second mouse, the second button may be a second mouse button of the second mouse, the wheel may be a mouse wheel of the second mouse, and the second device touch area portion may be a designated area of an outside of the second mouse, which correspond to at least one of the second instrument. When the controller determines that the first sensing command is output due to a touch operation after giving the push operation to the first mouse button, and with this, the second sensing command is output due to a touch operation to the second instrument, the corresponding function may be operated.

The first device may be a mouse and the first button that is the first instrument push apparatus may be a mouse button of the mouse. Here, the first button push sensing portion may be a mouse button push sensing portion which senses a push to the mouse button, the first instrument push apparatus touch portion and the first instrument push apparatus second touch portion provided at the mouse button may include the touch sensors which sense touches to the mouse button. When the controller determines that the first sensing command is output due to a touch operation after giving the push operation to the mouse button, and with this, the second sensing command is output due to additional touch operations to the mouse button, the corresponding function may be operated.

The first device may be a mouse and the first button that is the first instrument push apparatus may be a first mouse button of the mouse. Here, the first instrument push apparatus touch portion provided at the first mouse button may include the touch sensor which senses a touch to the first mouse button, the second button may be a second mouse button of the mouse, the wheel may be a mouse wheel, and the first device touch area portion may be a designated area of an outside of the first mouse, which correspond to at least one of the second instrument. When the controller determines that the first sensing command is output due to a touch operation to the first mouse button and the second sensing command is output due to a touch operation to the second instrument, the corresponding function may be operated.

The first device may be a first mouse and the first button that is the first instrument push apparatus may be a first mouse button of the first mouse. Here, the first instrument push apparatus touch portion provided at the first mouse button may include the touch sensor which senses a touch to the first mouse button, the second device may be a second mouse separate from the first mouse, the second instrument may be provided at the second mouse, the second button may be a second mouse button of the second mouse, the wheel may be a mouse wheel of the second mouse, and the second device touch area portion may be a designated area of an outside of the second mouse, which correspond to at least one of the second instrument. When the controller determines that the first sensing command is output due to a touch operation to the first mouse button, and with this, the second sensing command is output due to a touch operation to the second instrument, the corresponding function may be operated.

The first device may be a mouse and the first button that is the first instrument push apparatus may be a mouse button of the mouse. Here, the first instrument push apparatus touch portion and the first instrument push apparatus second touch portion provided at the mouse button may include the touch sensors which sense touches to the mouse button. When the controller determines that the first sensing command is output due to a touch operation to the mouse button, and with this, the second sensing command is output due to additional touch operations to the mouse button, the corresponding function may be operated.

The corresponding operation portion may be a user interface and an operation of the corresponding function may be operating a menu corresponding to an interface area or contents in the interface area.

The operation of the menu may be activating the menu corresponding to the interface area or the contents in the interface area.

The operation of the menu may be selecting any one of the activated menu corresponding to the interface area or the contents in the interface area.

The operation of the menu may be moving from a first menu to a second menu, which are selectable from selective items in the activated menu in the interface area.

The operation of the menu may be selecting a selective item in the activated menu in the interface area to be operable or canceling the selecting not to be operable.

The corresponding operation portion may be a central processing unit (CPU) and the operating of the corresponding function may be controlling the user device by operating the CPU.

An operation command of the corresponding operation portion may be executing a designated shortcut command.

The designated shortcut command may be activating or deactivating a user interface window or a designated function of a user program.

The designated function of the user program may be a text search function of a text editor.

The controller may operate the CPU that is the corresponding operation portion, and displaying the operation of the corresponding function on the display portion may be performed by operating a light source provided at all or part of the display portion.

The touch sensor may be embodied as at least one of a resistive film type, a pressure sensing type, an electrostatic type, a heat detection type, a motion detection type, and an optical type.

Another aspect of the present invention provides a device control apparatus including a first instrument pedal and a second instrument operated by an operation of a foot of a driver, a controller which controls an operation of a vehicle based on a pressure or a touch to the first instrument pedal and the second instrument, a first instrument pedal sensing portion which senses an operation with respect to the first instrument pedal, and a second instrument touch portion which senses an operation with respect to the second instrument. Here, the first instrument pedal includes a brake pedal, the second instrument includes at least one of an accelerator pedal, a footrest, and a clutch, the first instrument pedal sensing portion includes a brake pedal sensing portion which senses an operation with respect to the brake pedal, the second instrument touch portion includes a touch sensor which senses a touch to the accelerator pedal, the footrest, or the clutch, and the controller operates a parking brake by controlling a parking brake driving portion and moves the brake pedal to a position relatively downward from an operation position after operating the parking brake when the brake pedal is operated on a preset first reference condition and the accelerator pedal, the footrest, or the clutch is operated on a preset second reference condition while the vehicle stops.

The first instrument pedal sensing portion may sense a pedal effort to the first instrument pedal, and the second instrument touch portion may sense a touch to the second instrument.

The controller may determine that the first instrument pedal is operated on the first reference condition when the pedal effort to the first instrument pedal is maintained at a reference intensity or higher or maintained for a reference time and may determine that the second instrument is operated on the second reference condition when the touch to the second instrument occurs as many as a preset reference number or occurs for a reference time.

When it is determined that the first instrument pedal is operated on the first reference condition, the controller may sense the operation with respect to the second instrument through the second instrument touch portion.

The second instrument touch portion may include a touch sensor mounted on a top of the second instrument and the touch sensor may be embodied as a resistive film type, a pressure sensing type, an electrostatic type, a heat detection type, or an optical type.

The controller may determine that the vehicle stops when a speed of the vehicle is a preset reference speed or lower.

Still another aspect of the present invention provides a device control apparatus including a first instrument pedal and a second instrument operated by an operation of a foot of a driver, a controller which controls an operation of a vehicle based on a pressure or a touch to the first instrument pedal and the second instrument, a first instrument pedal sensing portion which senses an operation with respect to the first instrument pedal, and a second instrument touch portion which senses an operation with respect to the second instrument. Here, the first instrument pedal includes an accelerator pedal, the second instrument includes at least one of a brake pedal, a footrest, and a clutch, the first instrument pedal sensing portion includes an accelerator pedal sensing portion which senses an operation with respect to the accelerator pedal, the second instrument touch portion includes a touch sensor which senses a touch to the brake pedal, the footrest, or the clutch, and the controller controls to operate a preset corresponding function when the second instrument is operated on a preset second reference condition while the operation with respect to the first instrument pedal is performed on a preset first reference condition.

The controller may operate a cruise control function by controlling a cruise control driving portion when the accelerator pedal is operated on the first reference condition and the brake pedal, the footrest, or the clutch may be operated on the second reference condition while the vehicle is driven at a predetermined speed or higher.

The device control apparatus may further include a first instrument pedal touch portion which senses a touch to the first instrument pedal. Here, after operating the cruise control function, the controller may reduce the speed of the vehicle when the touch to the first instrument pedal is sensed by the first instrument pedal touch portion and may increase the speed of the vehicle when the touch to the second instrument is sensed by the second instrument touch portion.

The device control apparatus may further include a first instrument pedal touch portion which senses a touch to the first instrument pedal. Here, after operating the cruise control function, the controller may increase the speed of the vehicle when the touch to the first instrument pedal is sensed by the first instrument pedal touch portion and may reduce the speed of the vehicle when the touch to the second instrument is sensed by the second instrument touch portion.

The controller may control a level of increasing or reducing the speed of the vehicle to be different based on a number of the touches to the first instrument pedal or the second instrument.

The device control apparatus may further include an output portion which outputs a signal informing an operation of the corresponding function when the preset corresponding function is operated.

Yet another aspect of the present invention provides a device control apparatus including a first instrument pedal and a second instrument operated by an operation of a foot of a driver and a controller which controls an operation of a vehicle based on a pressure or a touch to the first instrument pedal and the second instrument.

One aspect of the present invention provides a control system provided with a device control function. The control system includes a first instrument push apparatus and a touch sensing portion and a controller which controls an operation of a user device based on operations with respect to the first instrument push apparatus and the touch sensing portion. Here, the controller outputs sensing commands with respect to the operations with respect to the first instrument push apparatus and the touch sensing portion, a first sensing command is output by sensing the operation with respect to the first instrument push apparatus, and a second sensing command is output by sensing the operation with respect to the touch sensing portion.

The controller may control a preset corresponding function of a corresponding operation portion included in the user device to be operated when the first sensing command and the second sensing command are output.

The control system may include a first instrument push sensing portion which senses a push pressure to the first instrument push apparatus. Here, the controller may output the first sensing command when the push pressure to the first instrument push apparatus, sensed by the first instrument push sensing portion, is maintained at a preset reference intensity or higher or is maintained for a reference time and may output the second sensing command when the first sensing command is output and then a touch sensed by the touch sensing portion occurs as many as a preset reference number or occurs for a reference time.

The control system may include a first instrument push sensing portion which senses a push pressure to the first instrument push apparatus. Here, the touch sensing portion may include a first instrument push apparatus touch portion which senses a touch to the first instrument push apparatus, and the controller may output the first sensing command when the push pressure to the first instrument push apparatus, sensed by the first instrument push sensing portion, is maintained at a preset reference intensity or higher or maintained for a reference time and then the touch to the first instrument push apparatus, sensed by the first instrument apparatus touch portion, occurs for a reference time and may output the second sensing command when the first sensing command is output and then a touch sensed by the touch sensing portion occurs as many as a preset reference number or occurs for a reference time.

The touch sensing portion may include a first instrument push apparatus touch portion which senses a touch to the first instrument push apparatus, and the controller may output the first sensing command when the touch to the first instrument push apparatus, sensed by the first instrument push apparatus touch portion, occurs for a preset reference time and may output the second sensing command when the first sensing command is output and then a touch sensed by the touch sensing portion occurs as many as a preset reference number or occurs for a reference time.

One aspect of the present invention provides a computer readable medium in which a program which outputs a first sensing command by sensing an operation with respect to a first instrument push apparatus, outputs a second sensing command by sensing an operation with respect to a touch sensing portion, and controls an operation of a user device based on the operation with respect to the first instrument push apparatus and the operation with respect to the touch sensing portion is recorded.

A preset corresponding function of a corresponding operation portion included in the user device may be controlled to be operated when the first sensing command and the second sensing command are output.

One aspect of the present invention provides a method of controlling a device. The method includes outputting a first sensing command by sensing an operation with respect to a first instrument push apparatus, outputting a second sensing command by sensing an operation with respect to a touch sensing portion, and controlling an operation of a user device based on the operation with respect to the first instrument push apparatus and the operation with respect to the touch sensing portion.

The method may include controlling a preset corresponding function of a corresponding operation portion included in the user device to be operated when the first sensing command and the second sensing command are output.

The method may include a first instrument push sensing portion which senses a push pressure to the first instrument push apparatus. Here, in the outputting of the first sensing command, the first sensing command may be output when the push pressure to the first instrument push apparatus, sensed by the first instrument push sensing portion, is maintained at a preset reference intensity or higher or is maintained for a reference time. In the outputting of the second sensing command, the second sensing command may be output when the first sensing command is output and then a touch sensed by the touch sensing portion occurs as many as a preset reference number or occurs for a reference time.

The method may include a first instrument push sensing portion which senses a push pressure to the first instrument push apparatus. Here, the touch sensing portion may include a first instrument push apparatus touch portion which senses a touch to the first instrument push apparatus. In the outputting of the first sensing command, the first sensing command may be output when the push pressure to the first instrument push apparatus, sensed by the first instrument push sensing portion, is maintained at a preset reference intensity or higher or maintained for a reference time and then the touch to the first instrument push apparatus, sensed by the first instrument push apparatus touch portion, occurs for a reference time. In the outputting of the second sensing command, the second sensing command may be output when the first sensing command is output and then a touch sensed by the touch sensing portion occurs as many as a preset reference number or occurs for a reference time.

The touch sensing portion may include a first instrument push apparatus touch portion which senses a touch to the first instrument push apparatus. In the outputting of the first sensing command, the first sensing command may be output when the touch to the first instrument push apparatus, sensed by the first instrument push apparatus touch portion, occurs for a reference time. In the outputting of the second sensing command, the second sensing command may be output when the first sensing command is output and then a touch sensed by the touch sensing portion occurs as many as a preset reference number or occurs for a reference time.

Another aspect of the present invention provides a method of controlling a device. The method includes determining, by a controller, whether a vehicle stops based on a speed of the vehicle, sensed by a speed sensing portion, sensing an operation with respect to a first instrument pedal through a first instrument pedal sensing portion when the vehicle stops, sensing an operation with respect to a preset second instrument using a second instrument touch portion when the first instrument pedal is operated on a preset first reference condition, and controlling a preset corresponding function to be operated when the second instrument is operated on a preset second reference condition. Here, the first instrument pedal includes a brake pedal, the second instrument includes at least one of an accelerator pedal, a footrest, and a clutch, the first instrument pedal sensing portion includes a brake pedal sensing portion which senses an operation with respect to the brake pedal, the second instrument touch portion includes a touch sensor which senses a touch to the accelerator pedal, the footrest, or the clutch. In the controlling of the preset corresponding function to be operated, the controller operates a parking brake by controlling a parking brake driving portion and then moves the brake pedal to a position relatively downward from an operation position when the brake pedal is operated on the first reference condition and the accelerator pedal, the footrest, or the clutch is operated on the second reference condition.

The first instrument pedal sensing portion may sense a pedal effort to the first instrument pedal, and the second instrument touch portion may sense a touch to the second instrument.

The controller may determine that the first instrument pedal is operated on the first reference condition when the pedal effort to the first instrument pedal is maintained at a reference intensity or higher or maintained for a reference time and may determine that the second instrument is operated on the second reference condition when the touch to the second instrument touch portion occurs as many as a preset reference number or occurs for a reference time.

Still another aspect of the present invention provides a method of controlling a device. The method includes sensing, by a controller, an operation with respect to a first instrument pedal using a first instrument pedal sensing portion, sensing an operation with respect to a preset second instrument using a second instrument touch portion when the first instrument pedal is operated on a preset first reference condition, and controlling a preset corresponding function to be operated when the second instrument is operated on a preset second reference condition. Here, the first instrument pedal includes an accelerator pedal, the second instrument includes at least one of a brake pedal, a footrest, and a clutch, the first instrument pedal sensing portion includes an accelerator pedal sensing portion which senses an operation with respect to the accelerator pedal, and the second instrument touch portion includes a touch sensor which senses a touch to the brake pedal, the footrest, or the clutch.

The method may further include, before the sensing of the operation with respect to the first instrument pedal, determining whether a speed of a vehicle, sensed by a speed sensing portion, is a predetermined speed or higher.

In the controlling of the preset corresponding function to be operated, the controller may operate a cruise control function by controlling a cruise control driving portion when the accelerator pedal is operated on the first reference condition and the brake pedal, the footrest, or the clutch is operated on the second reference condition while the vehicle is driven at the predetermined speed or higher.

After operating the cruise control function, the controller may reduce the speed of the vehicle when a touch to the first instrument pedal is sensed and may increase the speed of the vehicle when a touch to the second instrument is sensed.

After operating the cruise control function, the controller may increase the speed of the vehicle when a touch to the first instrument pedal is sensed and may reduce the speed of the vehicle when a touch to the second instrument is sensed.

The controller may control a level of increasing or reducing the speed of the vehicle to be different based on a number of the touches to the first instrument pedal or the second instrument.

The method may further include outputting a signal informing an operation of the corresponding function after controlling the preset corresponding function to be operated.

Yet another aspect of the present invention provides a method of controlling a device. The method includes sensing, by a controller, an operation with respect to a first instrument pedal using a first instrument pedal sensing portion, sensing an operation with respect to a preset second instrument using a second instrument touch portion when the first instrument pedal is operated on a preset first reference condition, and controlling a preset corresponding function to be operated when the second instrument is operated on a preset second reference condition.

### [Advantageous Effects]

According to the present invention, since a parking brake is operated when intention of a driver to maintain a vehicle in a stop state is sensed, inconvenience to the driver to continuously step on a brake pedal may be eased.

Also, according to the present invention, since a cruise control function is operated when intention of a driver to maintain a constant speed of a vehicle is sensed, inconvenience to the driver to continuously step on an accelerator pedal may be eased and a speed of the vehicle is simply adjusted.

Also, according to the present invention, since it is possible to control various functions set in a user device based on button-push and touch operations with respect to an input device such as a mouse, a user's convenience is increased.

Also, according to the present invention, even though a single button or a small number of buttons are provided, various functions that users want may be controlled.

Also, according to the present invention, since a user may control a user device by operating an input device using one hand not two hands, the user's convenience is increased and usability and accessibility for the disabled using only one hand to a user device may be improved.

### [Brief Description of Drawings]

FIG. 1 is a functional block diagram of a device control apparatus according to one embodiment of the present invention.
FIG. 2 is a view illustrating positions of a brake pedal, an accelerator pedal, and a footrest according to one embodiment of the present invention in an automatic transmission vehicle in detail.
FIG. 3 is a view illustrating positions of a brake pedal, an accelerator pedal, and a clutch according to one embodiment of the present invention in a manual transmission vehicle in detail.
FIG. 4 is an internal configuration diagram of the vehicle according to one embodiment of the present invention.

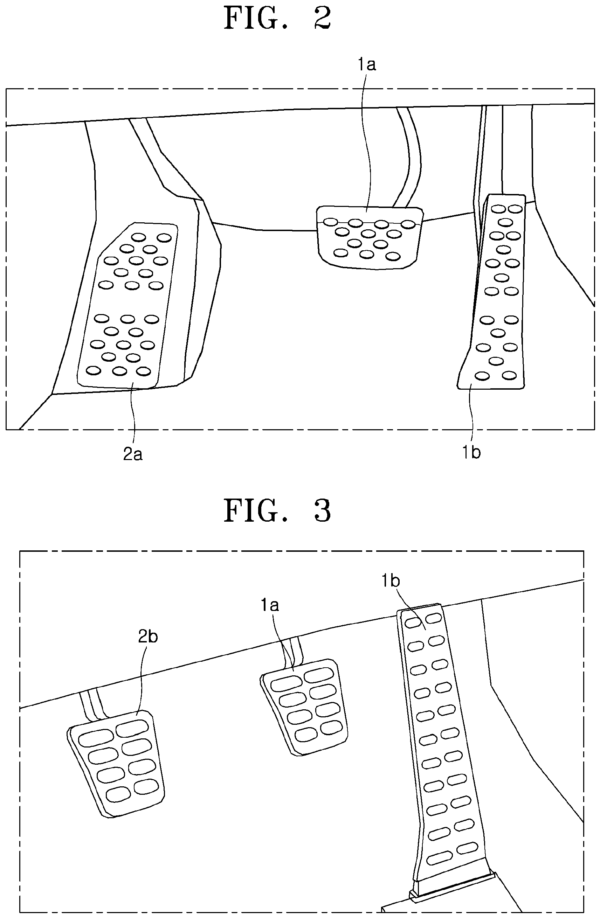

FIG. 3 is a view illustrating positions of a first mouse button, a second mouse button, a mouse wheel, and a mouse touch area portion according to one embodiment of the present invention in detail.

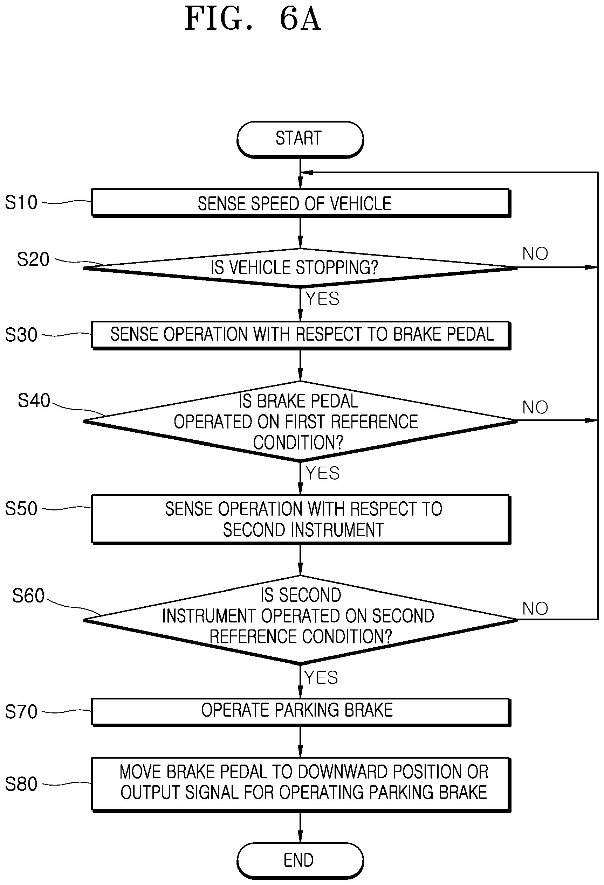

FIG. 6A is a flowchart illustrating a process of implementing a method of controlling a device according to one embodiment of the present invention.

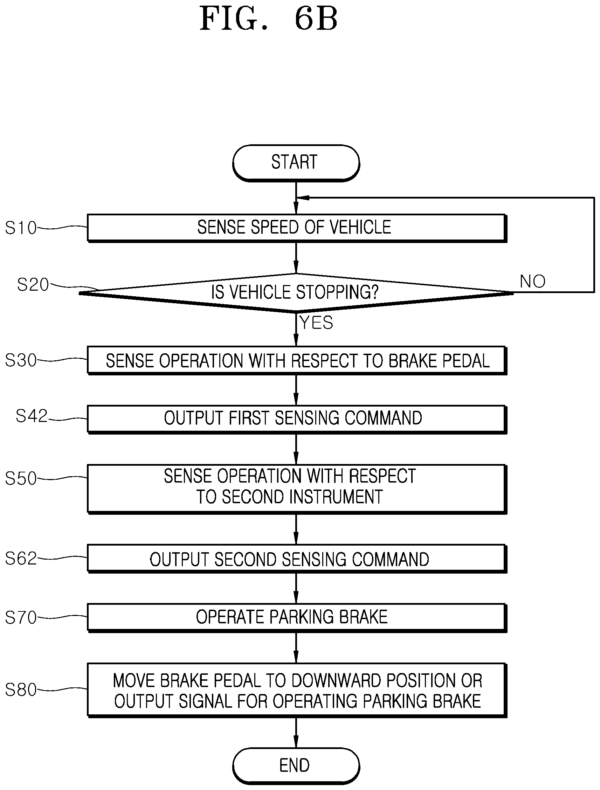

FIG. 6B is a flowchart illustrating a process of implementing a method of controlling a device according to another embodiment of the present invention.

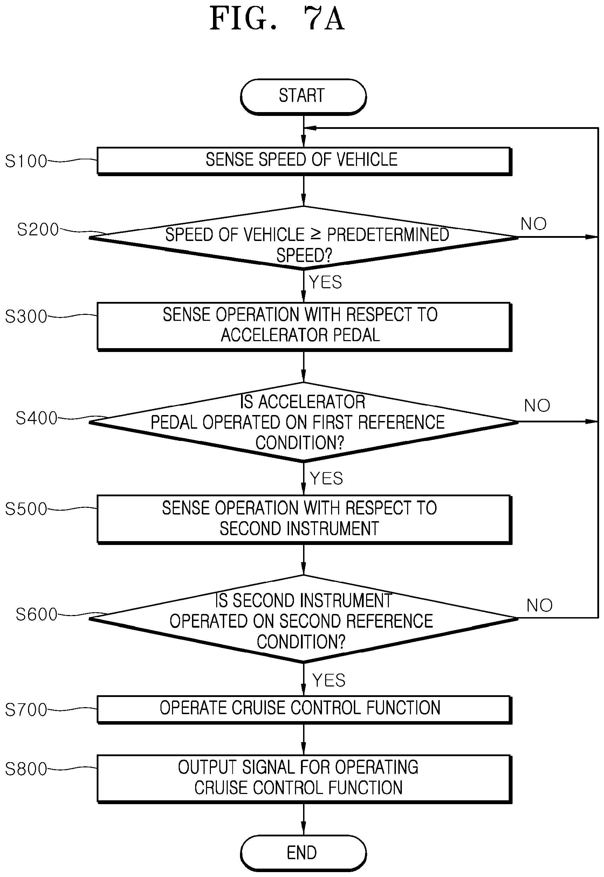

FIG. 7A is a flowchart illustrating a process of implementing a method of controlling a device according to still another embodiment of the present invention.

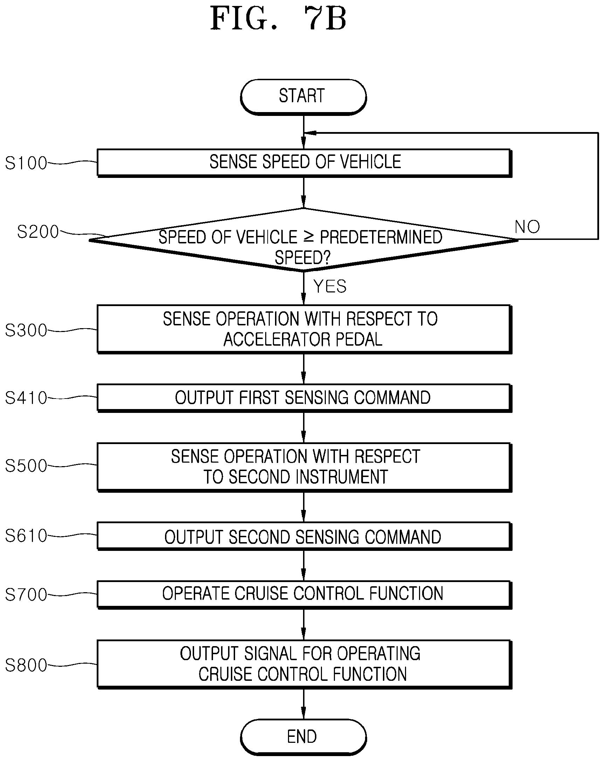

FIG. 7B is a flowchart illustrating a process of implementing a method of controlling a device according to yet another embodiment of the present invention.

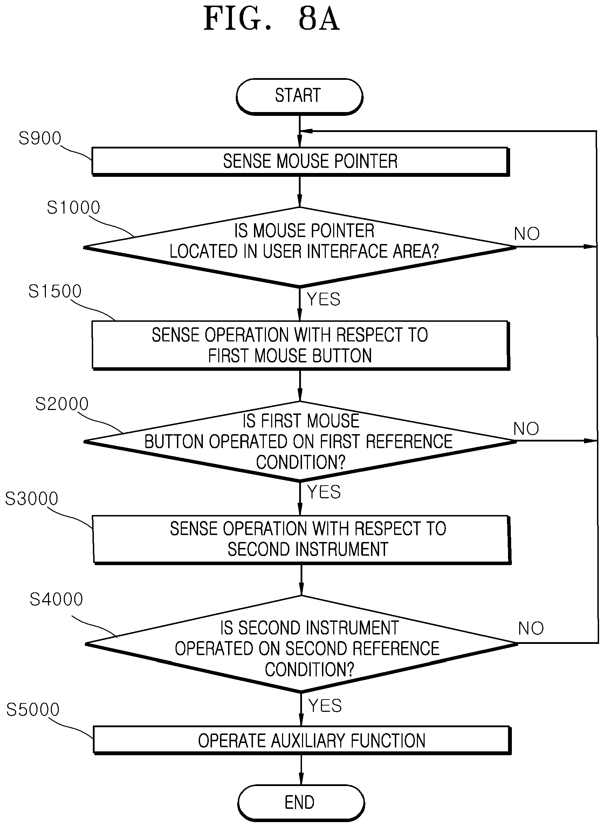

FIG. 8A is a flowchart illustrating a process of implementing a method of controlling a device according to even another embodiment of the present invention.

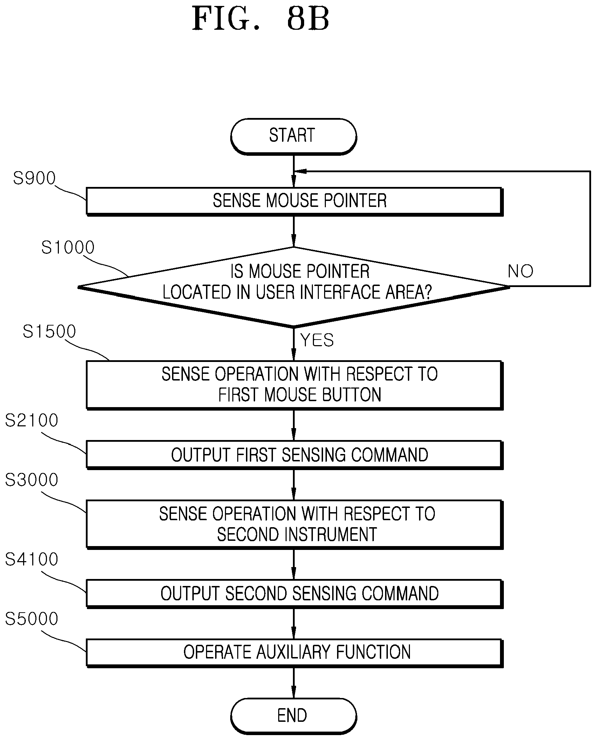

FIG. 8B is a flowchart illustrating a process of implementing a method of controlling a device according to a further embodiment of the present invention.

### [Mode for Invention]

Hereinafter, an apparatus, a system, and a method for controlling a device according to one embodiment of the present invention will be described in detail with reference to the attached drawings. Throughout the drawings, thicknesses of lines or sizes of components may be exaggerated for clarity and convenience of description. Also, the terms described below are defined considering functions thereof in the present invention, which may vary according to a user, intention of an operator, or a practice. Accordingly, the definitions thereof will be given based on the contents throughout the specification.

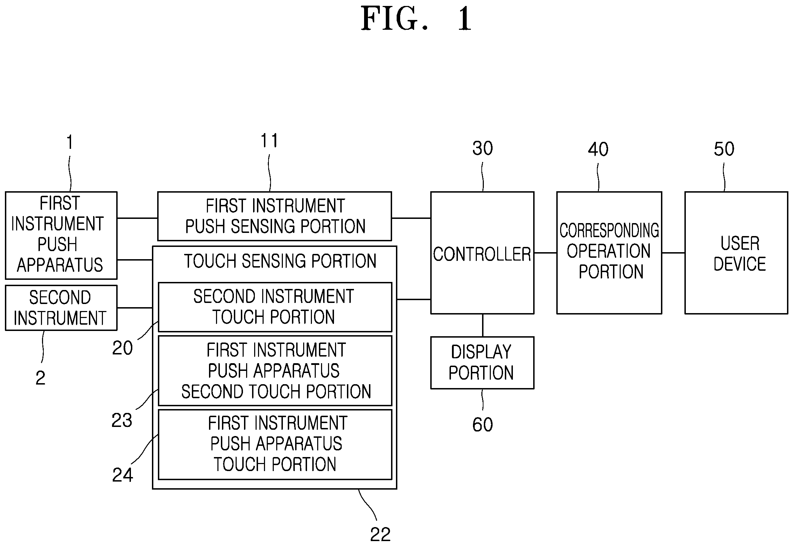

FIG. 1 is a functional block diagram of a device control apparatus according to one embodiment of the present invention.

Referring to FIG. 1, the device control apparatus includes a first instrument push apparatus 1, a second instrument 2, a first instrument push sensing portion 11, a touch sensing portion 20, a controller 30, a corresponding operation portion 40, and a display portion 60.

The first instrument push apparatus 1 and the touch sensing portion 22 are operated by a motion of a user and may include various components according to a user device 50 that is a target to be controlled.

The first instrument push sensing portion 11 and the touch sensing portion 22 are operated by a motion of the user, and the controller 30 controls an operation of the user device based on operations on the first instrument push apparatus 1 and the touch sensing portion 22.

The controller 30 outputs sensing commands for the operations on the first instrument push apparatus 1 and the touch sensing portion 22, in which a first sensing command is output by sensing the operation with respect to the first instrument push apparatus 1 and a second sensing command is output by sensing the operation with respect to the touch sensing portion 22.

The controller 30 controls a preset corresponding function of the corresponding operation portion 40 included in the user device 50 to be operated when the first sensing command and the second sensing command are output.

The display portion 60 displays a signal which informs an operation of the preset corresponding function when the corresponding function is operated and operates while the corresponding function is operated.

The display portion 60 may be at least one of an electronic device provided at the first instrument push apparatus 1, the second instrument 2, and the user device 50 and an electronic device connected to the user device 50 either with or without wires. The display portion 60 may display the signal informing the operation of the corresponding function through a movement, a sound, vibrations, light emission, and visual display.

The device control apparatus according to one embodiment of the present invention includes the first instrument push sensing portion 11 which senses a push pressure to the first instrument push apparatus 1. Here, the controller 30 outputs the first sensing command when the push pressure to the first instrument push apparatus 1, sensed by the first instrument push sensing portion 11, is maintained at a preset reference intensity or higher or is maintained for a reference time and outputs the second sensing command when the first sensing command is output and then a touch sensed by the touch sensing portion 22 occurs as many as a preset reference time or occurs for a reference time.

Also, the second instrument 2 is provided at or connected to the user device. Here, the touch sensing portion 22 includes a second instrument touch portion 20 which senses a touch to the second instrument 2 and the second sensing command is output when the touch to the second instrument 2, sensed by the second instrument touch portion 20, occurs as many as a preset reference number or occurs for a reference time.

The touch sensing portion 22 includes a first instrument push apparatus second touch portion 23 which senses a touch to the first instrument push apparatus 1, and the second sensing command is output when an additional touch to the first instrument push apparatus 1, sensed by the first instrument push apparatus second touch portion 23, occurs as many as a preset reference number or occurs for a reference time.

The first instrument push sensing portion 11 senses a push pressure to the first instrument push apparatus 1, and the touch sensing portion 22 includes a first instrument push apparatus touch portion 24 which senses a touch to the first instrument push apparatus 1. The first instrument push sensing portion 11 is a first button-push sensing portion which senses a push operation to a first button.

When a push sensing portion is present in the first instrument push apparatus 1, the first sensing command may be output due to the push pressure to the first instrument push apparatus 1 and the second sensing command may be output due to the touch to the second instrument 2. Otherwise, the first instrument push apparatus 1 may function as the touch sensing portion and the second sensing command may be output due to the touch to the first instrument push apparatus 1.

The controller 30 outputs the first sensing command when the push pressure to the first instrument push apparatus 1, sensed by the first instrument push sensing portion 11, is maintained at the preset reference intensity or higher or maintained for the reference time and then the touch to the first instrument push apparatus 1, sensed by the first instrument push apparatus touch portion 24, occurs for the reference time and outputs the second sensing command when the touch sensed by the touch sensing portion 22 occurs as many as the preset reference number or occurs for the reference time.

The second instrument 2 is provided at or connected to the user device 50, and the touch sensing portion 22 includes the second instrument touch portion 20 which senses the touch to the second instrument 2.

The controller 30 outputs the second sensing command when the touch to the second instrument 2, sensed by the second instrument touch portion 20, occurs as many as the preset reference number or occurs for the reference time.

A touch portion may be provided at the first instrument push apparatus 1, with the push sensing portion. In this case, the first sensing command is output when a touch is present after a push pressure is applied to the first instrument push apparatus 1.

The second sensing command may be output due to the touch to the second instrument 2 that is a touch sensing portion or may be operated due to a touch of a push apparatus that is a touch sensing portion.

In this case, when both the first sensing command and the second sensing command are output due to touches of the first instrument push apparatus 1, a second touch may be operated by a second touch portion unlike a first touch.

Unlike this, when the first instrument push apparatus 1 includes only a touch portion without a push sensing portion, the first sensing command may be output only when a touch is applied to the first instrument push apparatus 1. The second sensing command may be output due to the touch to the second instrument 2 that is a touch sensing portion or may be operated due to a touch of a push apparatus that is a touch sensing portion. In this case, both the first sensing command and the second sensing command are output due to touches of the first instrument push apparatus 1 and a second touch may be operated by a second touch portion unlike a first touch.

The first instrument push apparatus touch portion 24 and the first instrument push apparatus second touch portion 23 may be provided identically or separately.

It may be operated using two separate touch portions or a single touch portion to generate a touch command with respect to the first instrument push apparatus touch portion 24 twice.

A touch sensing portion corresponding to outputting of the second sensing command may be sensed only after outputting the first sensing command or may be only sensed while the second sensing command does not occur when the first sensing command is not output.

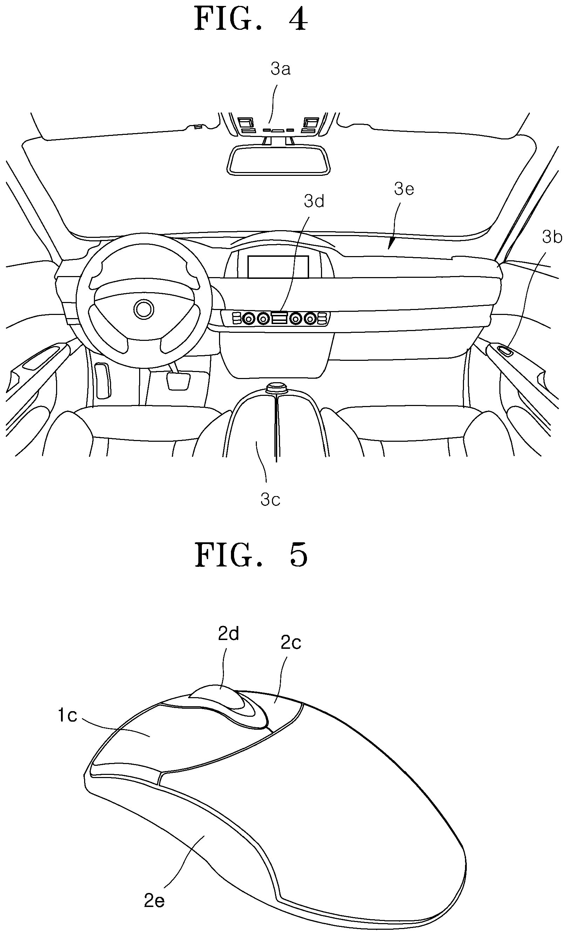

Meanwhile, as an example, the user device may be a running apparatus such as a vehicle. Referring to FIG. 4, the first instrument push apparatus 1 may be a brake pedal 1a and the second instrument 2 may be at least one of an accelerator pedal 1b, a footrest 2a, a clutch (not shown), an overhead console (not shown), a door trim (not shown), a center console (not shown), a center fascia (not shown), a dashboard, and an instrument (not shown) mounted on the dashboard.

The first instrument push sensing portion 11 may employ a brake pedal sensing portion which senses a push operation with respect to the brake pedal 1a, and the second instrument touch portion 20 may employ a touch sensor which senses a touch to the second instrument 2.

The corresponding operation portion 40 is a parking brake, the operation of the corresponding function is operating the parking brake by controlling a driving portion of the parking brake, and the corresponding function is operated in a stop-process state in which the vehicle is stopping or stoppable.

Meanwhile, the controller 30 determines the stop-process state in which the vehicle is stopping or stoppable when a speed of the vehicle is a preset reference speed or lower.

In this case, when the display portion 60 displays the signal informing the operation of the corresponding function, the controller 30 moves the brake pedal 1a to a position relatively downward from an operation position.

Also, when the second sensing command is output due to an operation with respect to the second instrument 2 while the parking brake is operated, the controller 30 releases the parking brake by controlling the driving portion of the parking brake.

Meanwhile, the corresponding operation portion 40 is a cruise control device, the operation of the corresponding function is operating a cruise control function by controlling a driving portion of the cruise control device, and the corresponding function is operated while the vehicle is driven at a predetermined speed or more.

After operating the cruise control function, the controller 30 reduces the speed of the vehicle when the first sensing command is output due to the operation with respect to the accelerator pedal 1b and increases the speed of the vehicle when the second sensing command is output due to the operation with respect to the second instrument 2. After operating the cruise control function, the speed of vehicle is increased by outputting the first sensing command when the accelerator pedal 1b is operated and the speed of the vehicle is reduced by outputting the second sensing command when the second instrument 2 is operated.

Also, the controller 30 controls a level of increasing or reducing the speed of the vehicle to be different based on the number of outputting the first sensing command or the second sensing command. While the cruise control function is operated, the controller 30 releases the operation of the cruise control function by controlling the driving portion of the cruise control device when the second sensing command is output due to the operation with respect to the second instrument 2.

According to another embodiment of the present invention, the user device 50 is a computer. Referring to FIGS. 1 and 5, the first instrument push apparatus 1 may be a first button 1c of a first device provided at or connected to the computer through wires or wirelessly and the second instrument 2 may be provided at the first device. The second instrument 2 may include at least one of a second button 2c, a wheel 2d, and a first device touch area portion 2e that is a designated area on an outside of the first device. The first instrument push apparatus touch portion 24 may be the first instrument push apparatus second touch portion 23 which senses a push operation with respect to the first button 1c, and the second instrument touch portion 20 may include a touch sensor which senses a touch to the second instrument 2.

When it is determined that the first sensing command is output due to the push operation to the first mouse button 1c, and with this, the second sensing command is output due to a touch operation to the second instrument 2, the controller 30 controls the corresponding function to be operated.

The first device is a first mouse, the first button 1c that is the first instrument push apparatus 1 is a first mouse button of the first mouse, and a second touch portion push sensing portion that is the first instrument push apparatus 1 is a first mouse button push sensing portion which senses a push to the first mouse button.

A second device is a second mouse separate from the first mouse, the second instrument 2 is provided at the second mouse and at least one corresponding to the second instrument 2, the second button 2c is a second mouse button of the second mouse, the wheel 2c is a mouse wheel of the second mouse, and a second device touch area portion is a designated area on an outside of the second mouse. Here, when it is determined that the first sensing command is output due to the push operation to the first mouse button, and with this, the second sensing command is output due to the touch operation to the second instrument 2, the controller 30 controls the corresponding function to be operated.

When it is determined that the first sensing command is output due to a touch operation after the push operation to the first mouse button, and with this, the second sensing command is output due to the touch operation to the second instrument 2, the controller 30 controls the corresponding function to be operated.

Meanwhile, the touch sensor is embodied as at least one of a resistive film type, a pressure sensing type, an electrostatic type, a heat detection type, a motion sensing type, and an optical type. The corresponding operation portion 40 is a user interface and the operation of the corresponding function is operating a menu corresponding to an interface area or the contents in the interface area.

The corresponding operation portion 40 may employ a central processing unit (CPU), the operation of the corresponding function is controlling the user device by operating the CPU, and an operation command of the corresponding operation portion 40 is executing a designated shortcut command. Here, the designated shortcut command includes activating or deactivating a user interface window or a designated function of a user program and the designated function of the user program includes a text search function of a text editor.

Meanwhile, the controller 30 operates the CPU that is the corresponding operation portion 40 and displaying the operation of the corresponding function on the display portion 60 is performed by operating a light source provided at all or part of the display portion 60.

The device control apparatus according to the embodiment of the present invention is as follows.

In detail, when a pressure to the first instrument push apparatus 1, sensed by the first instrument push sensing portion 11, is maintained at a preset reference intensity or higher or maintained for a reference time, the controller 30 may output the first sensing command.

Also, when a touch to the first instrument push apparatus 1, sensed by the first instrument push apparatus touch portion 24, occurs for a reference time, the controller 30 may output the first sensing command.

Also, when the pressure to the first instrument push apparatus 1 is maintained at the reference intensity or higher or maintained for the reference time and then the touch to the first instrument push apparatus 1, sensed by the first instrument push apparatus touch portion 24, occurs for the reference time, the controller 30 may output the first sensing command.

However, since the embodiment is not limited thereto, conditions for outputting the first sensing command may be set considering various other factors.

Also, the controller 30 may output the second sensing command when the touch to the second instrument 2, sensed by the second instrument touch portion 20, occurs as many as a preset reference number or occurs for a reference time.

In the embodiment, when it is determined that the first instrument push apparatus 1 satisfies conditions capable of outputting the first sensing command, sequentially, the controller 30 senses an operation with respect to the second instrument 2 using the second instrument touch portion 20.

When the second instrument 2 is operated on conditions capable of outputting the second sensing command while the first instrument push apparatus 1 is operated on conditions capable of outputting the first sensing command, the controller 30 controls the corresponding function of the corresponding operation portion 40 included in the user device 50 to be operated.

When an operation is performed using only one button of a mouse including only one button or a plurality of buttons, the one button is pushed or touched by one finger and then the same button is touched by another finger.

In detail, when a pressure to the first instrument push apparatus 1, sensed by the first instrument push sensing portion 11, is maintained at a preset reference intensity or higher or maintained for a reference time, the controller 30 may output the first sensing command.

Also, when a touch to the first instrument push apparatus 1, sensed by the first instrument push apparatus touch portion 24, occurs for a reference time, the controller 30 may output the first sensing command.

Also, when the pressure to the first instrument push apparatus 1 is maintained at the reference intensity or higher or maintained for the reference time and then the touch to the first instrument push apparatus 1, sensed by the first instrument push apparatus touch portion 24, occurs for the reference time, the controller 30 may output the first sensing command.

However, since the embodiment is not limited thereto, conditions for outputting the first sensing command may be set considering various other factors.

Also, when a touch to the first instrument push apparatus 1, sensed by the first instrument push apparatus touch portion 24, occurs as many as a preset reference number or occurs for a reference time, the controller 30 may output the second sensing command.

In the embodiment, when it is determined that the first instrument push apparatus 1 is operated on a first reference condition, sequentially, the controller 30 may output the second sensing command by sensing an operation with respect to the first instrument push apparatus 1 using the first instrument push apparatus touch portion 24 that is a sensing portion.

When the first instrument push apparatus 1 is operated on a second reference condition while the first instrument push apparatus 1 is operated on the first reference condition, the controller 30 outputs the second sensing command and controls the corresponding function of the corresponding operation portion 40 included in the user device 50 to be operated.

As described above, in the embodiment, the pressure or touch of the user to the first instrument push apparatus 1 and the touch of the user to the second instrument 2 or the first instrument push apparatus 1 are sensed and various corresponding functions of the corresponding operation portion 40 are operated according to a detailed operating method, thereby allowing the user to simply use the user device 50.

Hereinafter, a detailed application process of the device control apparatus according to the embodiment will be described based on several examples of the user device 50.

First, referring to FIGS. 2 and 3, the user device 50 is a vehicle. FIG. 2 is a view illustrating positions of a brake pedal, an accelerator pedal, and a footrest according to one embodiment of the present invention in an automatic transmission vehicle in detail. FIG. 3 is a view illustrating positions of a brake pedal, an accelerator pedal, and a clutch according to one embodiment of the present invention in a manual transmission vehicle in detail. FIG. 4 is an internal configuration diagram of the vehicle according to one embodiment of the present invention.

In detail, when the user device 50 is a vehicle, the first instrument push apparatus 1 means the brake pedal 1a or the accelerator pedal 1b capable of having a direct effect on an operation of the vehicle such as acceleration or deceleration.

Also, the second instrument 2 may mean at least one of the brake pedal 1a or the accelerator pedal 1b, which is not the first instrument push apparatus 1, the footrest 2a, a clutch 2b, an overhead console 3a, a door trim 3b, a center console 3c, a center fascia 3d, a dashboard 3e, and an instrument (not shown) mounted on a dashboard, which do not have a direct effect on the operation of the vehicle.

In addition, when the corresponding operation portion 40 of the user device 50 is a parking brake 41, the controller 30 operates the parking brake 41 by considering intensions of a driver with respect to whether to maintain the vehicle in a stop state while the vehicle stops, thereby saving the driver's effort to continuously step on the brake pedal 1a.

Also, when the corresponding operation portion 40 of the user device 50 is a cruise control device 42, the controller 30 operates a cruise control function by considering intensions of the driver with respect to whether to maintain a constant speed of the vehicle while the vehicle runs, thereby saving the driver's effort to continuously step on the accelerator pedal 1b.

First, a process of implementing a technology of automatically operating the parking brake described above when the brake pedal 1a is the first instrument push apparatus 1 will be described.

In detail, to determine whether the vehicle enters the stop state, the controller 30 determines that the vehicle enters a stop-process state when the speed of the vehicle, sensed by a speed sensing portion (not shown) is a preset reference speed or lower.

That is, to operate the parking brake 41, since it is necessary that the driver has intentions to continuously keep the vehicle in the stop-process state, which stops first, in the stop state or to shift the vehicle in the stop-process state, which is stoppable, to a complete stop state, in the embodiment, the controller 30 determines whether the vehicle is stopping or in the stop-process state to be stoppable, before sensing an operation of the driver with respect to the brake pedal 1a.

In detail, when the speed of the vehicle is reduced to be the reference speed or lower while an ignition thereof is turned on, the controller 30 may determine that the vehicle is in the stop-process state.

Here, the reference speed is a speed merely capable of determining that the vehicle is stopping. Since the speed may not be precisely measured as 0 even when the vehicle stops, the reference speed is set as a threshold value on which an error is reflected or is a stoppable speed at a level capable of determining that the vehicle is stoppable and may be a minimum speed appropriate for operating the parking brake 41 in the vehicle.

However, since a method of determining whether a vehicle is stopping or in a stop-process state of being stoppable according to the embodiment is not limited to the above description, the controller 30 may determine whether a vehicle is stopping using various other methods.

When it is determined that the vehicle is stopping, the controller 30 senses, through the first instrument push sensing portion 11 or the first instrument push apparatus touch portion 24, an operation with respect to the brake pedal 1a that is the first instrument push apparatus 1 using the brake pedal sensing portion that is the first instrument push sensing portion 11 and senses an operation with respect to at least one of the accelerator pedal 1b, the footrest 2a, the clutch 2b, the overhead console 3a, the door trim 3b, the center console 3c, the center fascia 3d, the dashboard 3e, or the instrument mounted on the dashboard, which are the second instrument 2, through the touch sensor of the second instrument touch portion 20.

In detail, when the second instrument 2 is operated on the preset second reference condition while the brake pedal 1a is operated on the preset first reference condition, the controller 30 operates the parking brake 41 by controlling a driving portion (not shown) of the parking brake 41, which is the corresponding operation portion 40, as the operation of the corresponding function.

Here, when the second instrument 2 is the accelerator pedal 1b, with respect to whether the brake pedal 1a and the second instrument 2 are operated on the respective reference conditions, the controller 30 determines whether the brake pedal 1a and the second instrument 2 are operated on the reference conditions based on a pedal effort with respect to the brake pedal 1a, sensed by the first instrument push sensing portion 11, or a touch to the brake pedal 1a, sensed by the first instrument push apparatus touch portion 24, and a touch to the accelerator pedal 1b, sensed by the second instrument touch portion 20.

In detail, as described above, when the pedal effort to the brake pedal 1a is maintained at a preset reference intensity or higher or maintained for a reference time, the controller 30 may determine that the brake pedal 1a is operated on the first reference condition.

That is, when the driver steps on the brake pedal 1a at the preset reference intensity or higher or steps on the brake pedal 1a for the preset reference time, the controller 30 determines that the brake pedal 1a is operated on the first reference condition or outputs the first sensing command.

Here, in relation to the first reference condition with respect to the brake pedal 1a, the reference intensity means a pedal effort necessary for stopping the vehicle and may be set differently according to properties of the vehicle and the reference time means a time enough to accept that the brake pedal 1a is operated to stop the vehicle.

Also, when the brake pedal 1a is operated on the first reference condition and the touch to the second instrument 2 occurs, it is determined that the second instrument 2 is operated on the second reference condition and the parking brake 41 is operated.

That is, in the embodiment, when there is only a touch to the second instrument 2 while the brake pedal 1a is operated to stop the vehicle, the parking brake 41 is operated instead of the driver, thereby providing convenience to the driver.

Here, the touch to the second instrument 2 may mean a simple touch with a pressure at a relatively lower level than general pressures which occur at the accelerator pedal 1b pressurized by the driver to accelerate the vehicle, the brake pedal 1a pressurized by the driver to decelerate the vehicle, and the clutch 2b pressurized by the driver to shift gears or may mean a general touch to the footrest 2a, the overhead console 3a, the door trim 3b, the center console 3c, the center fascia 3d, the dashboard 3e, or the instrument mounted on the dashboard.

Also, in relation to the second reference condition with respect to the second instrument 2, the controller 30 may operate the parking brake 41 when the touch to the second instrument 2 occurs additionally as many as a preset reference number or occurs for a reference time.

Here, the reference number may be set as various numerical values according to intentions of the driver such as a case of immediately separating after the touch to the second instrument 2 or a case of consecutively touching the second instrument 2.

That is, the second reference condition may be set in various methods including not only a case in which the driver touches the second instrument 2 with a foot but also a case of touching once or twice, etc.

Also, the reference time may be set identical to the reference time of the first reference condition with respect to the first instrument push apparatus 1 or may be set as a different time according to intentions of the driver.

Additionally, after operating the parking brake 41, the controller 30 may allow the driver to recognize that the parking brake 41 is operated for the driver by moving the brake pedal 1a to a position relatively downward from a position where the brake pedal 1a is operated by the driver.

In addition, in the embodiment, there is further included the display portion 60 which displays a signal informing the operation of the parking brake 41, which is the corresponding function to a case in which the parking brake 41 is operated under the control of the controller 30.

The controller 30 may use the first instrument push apparatus 1, the second instrument 2, an electronic device provided at the user device, and an electronic device connected to the user device through wires or wirelessly as the display portion 60 which displays the signal. When the brake pedal 1a is used as the display portion 60, with an operation of the parking brake 41, which is a corresponding function operation, as a signal of the brake pedal 1a which is the display portion 60, the brake pedal 1a is moved to a position relatively downward from a position of being operated by the driver, thereby allowing the driver to recognize that the parking brake 41 is operated instead of the driver.

However, a signal with respect to the corresponding function operation of the display portion 60 is not limited to a movement and may be provided as a sound, vibrations, light emission, visual display, etc.

That is, as described above, the brake pedal 1a is used as the display portion 60 and is moved to the position downward from the position of being operated, thereby informing the driver that the parking brake 41 is operating. However, it is possible to allow the driver to recognize that the parking brake 41 is operating, by outputting a text or image through an additional display portion 60.

The display portion 60 described above may be configured as a separate device connected to the vehicle through wires or wirelessly or may be embodied as an existing cluster or a navigation system, etc., included in a conventional vehicle.

Next, a process of implementing a technology of operating the cruise control device 42 described above when the accelerator pedal 1b is the first instrument push apparatus 1 will be described.

In detail, to determine whether a driver has intentions to operate a cruise control function, in the embodiment, the controller 30 determines whether a vehicle is driven at a predetermined speed or more before sensing an operation performed by the driver with respect to the accelerator pedal 1b.

That is, when the driver operates the first instrument push apparatus 1 and the second instrument 2 to satisfy following conditions while the vehicle is driven at the predetermined speed or more, the controller 30 operates the cruise control device 42.

Accordingly, when it is determined that the vehicle is driven at the predetermined speed or more, the controller 30 senses, through the first instrument push sensing portion 11 or the first instrument push apparatus touch portion 24, the operation with respect to the accelerator pedal 1b that is the first instrument push apparatus 1 using an accelerator pedal sensing portion that is the first instrument push sensing portion 11 and senses an operation with respect to at least one of the brake pedal 1a, the footrest 2a, the clutch 2b, the overhead console 3a, the door trim 3b, the center console 3c, the center fascia 3d, the dashboard 3e, or the instrument mounted on the dashboard, which are the second instrument 2, through the touch sensor of the second instrument touch portion 20.

In detail, when the second instrument 2 is operated on a preset second reference condition while the accelerator pedal 1b is operated on a preset first reference condition, the controller 30 operates the cruise control function by controlling a driving portion (not shown) of the cruise control device 42 which is the corresponding operation portion 40, as an operation of the corresponding function.

Here, the first reference condition and the second reference condition with respect to an operation of the driver necessary for operating the cruise control function may be set to be identical to the conditions with respect to the operation of the driver necessary for operating the parking brake 41. However, since the embodiment is not limited thereto, it is possible to set different conditions.

In detail, the controller 30 determines that the accelerator pedal 1b is operated on the first reference condition when a pedal effort to the accelerator pedal 1b is maintained at a preset reference intensity or higher or maintained for a reference time.

Here, in relation to the first reference condition with respect to the accelerator pedal 1b, the reference intensity means a pedal effort necessary for accelerating the vehicle and may be set differently according to properties of the vehicle, and the reference time means a time enough to accept that the accelerator pedal 1b is operated to accelerate the vehicle.

Also, when the accelerator pedal 1b is operated on the first reference condition and a touch to the second instrument 2 occurs, it is determined that the second instrument 2 is operated on the second reference condition and the cruise control device 42 is operated.

That is, in the embodiment, when there is only a touch to the second instrument 2 while the accelerator pedal 1b is operated to maintain a constant speed of the vehicle, the cruise control device 42 is operated instead of the driver, thereby providing convenience to the driver.

Here, the touch to the second instrument 2 may mean a simple touch with a pressure at a relatively lower level than a general pressure which occurs at the clutch 2b pressurized by the driver to shift gears or may mean a general touch to the footrest 2a, the overhead console 3a, the door trim 3b, the center console 3c, the center fascia 3d, the dashboard 3e, or the instrument mounted on the dashboard.

Also, in relation to the second reference condition with respect to the second instrument 2, the controller 30 may operate the cruise control device 42 when the touch to the second instrument 2 occurs additionally as many as a preset reference number.

Here, the reference number may be set as various numerical values according to intentions of the driver such as a case of immediately separating after the touch to the second instrument 2 or a case of consecutively touching the second instrument 2.

That is, the second reference condition may be set in various methods including not only a case in which the driver touches the second instrument 2 with a foot but also a case of touching once or twice, etc.

Also, after operating the cruise control function, the controller 30 may display a signal informing that the cruise control function that is the corresponding function is operated through the display portion 60 described above.

For example, after operating the cruise control function, the controller 30 may increase a speed of the vehicle when a touch to the accelerator pedal 1b is sensed and may reduce the speed of the vehicle when the touch to the second instrument 2 is sensed.

Also, since speed adjustment after the operation of the cruise control function is not limited to the methods described above, on the contrary, the speed of the vehicle may be reduced when the touch to the accelerator pedal 1b is sensed and may be increased when the touch to the second instrument 2 is sensed.

Furthermore, the controller 30 may control a level of increasing or reducing the speed of the vehicle to be different based on numbers of touches of the driver to the accelerator pedal 1b and the second instrument 2.

Next, referring to FIG. 5, a case in which the user device 50 is a computer will be described. FIG. 5 is a view illustrating positions of a first mouse button, a second mouse button, a mouse wheel, and a mouse touch area portion according to one embodiment of the present invention in detail.

In detail, when the user device 50 is a computer, the first instrument push apparatus 1 refers to the first mouse button 1cwhich is a first button 1c of a mouse that is a first device connected through wires or wirelessly to execute the computer.

Also, the second instrument 2 refers to the second mouse button 2c that is another second button 2c other than the first mouse button 1c included in the mouse that is the first device, the mouse wheel 2d, or the mouse touch area portion 2e that is the first device touch area portion 2e of the first device (mouse).

Here, the first device touch area portion 2e refers to a previously designated area of the first device (mouse), which senses a touch of a user and may be set as any area except the first button 1c, the second button 2c, and the wheel 2d.

In the embodiment, the mouse touch area portion 2e refers to a previously designated area of an outside of the mouse, which senses a touch of the user and may be set as any area except the first mouse button 1c, the second mouse button 2c, and the mouse wheel 2d described above.

In addition, when the corresponding operation portion 40 of the user device 50 is a user interface 43, based on an operation of the user with respect to the mouse, the controller 30 operates a menu corresponding to an interface area or the contents in the interface area, as an operation corresponding to the corresponding function.

The operation of the menu may include activating the menu corresponding to the interface area or the contents in the interface area, selecting any one of the activated menu, moving from a first menu to a second menu, which are selective objects among menu items in the activated menu, selecting the menu item in the activated menu to be operable, or canceling a selection not to be operable.

In the embodiment, when the corresponding operation portion 40 of the user device 50 is a CPU 44, based on an operation of the user with respect to the mouse, the controller 30 may execute a designated shortcut command and may activate or deactivate a user interface window like a text search function or a designated function of a user program.

First, when the corresponding operation portion 40 is the user interface 43, a process of implementing a technology of automatically controlling the corresponding user interface 43 will be described.

In detail, when a pointer of the mouse is located in a user interface area, the controller 30 senses an operation with respect to the first mouse button 1c through the first instrument push sensing portion 11 or the first instrument push apparatus touch portion 24 and senses an operation with respect to the second instrument 2 through the second instrument touch portion 20.

In detail, when the first mouse button 1c is operated on a preset first reference condition and the second instrument 2 is operated on a preset second reference condition, the controller 30 operates a menu corresponding to an area of the user interface 43 that is the corresponding operation portion 40 or the contents in the interface area, as an operation of the corresponding function.

Here, when the second instrument 2 is the second mouse button 2c, in relation to whether the first mouse button 1c and the second instrument 2 are operated on the respective reference conditions, the controller 30 determines whether first mouse button 1c and the second instrument 2 are operated on the reference conditions based on a pedal effort to the first mouse button 1c, sensed by the first instrument push sensing portion 11, a touch to the first mouse button 1c, sensed by the first instrument push apparatus touch portion 24, and a touch to the second mouse button 2c, sensed by the second instrument touch portion 20.

In detail, as described above, the controller 30 may determine that the first mouse button 1 c is operated on a first reference condition when a pressure to the first mouse button 1c is maintained at a preset reference intensity or higher or maintained for a reference time.

That is, when the user pressurizes the first mouse button 1c at the preset reference intensity or higher or pushes the first mouse button 1c for the preset reference time, the controller 30 determines that the first mouse button 1c is operated on the first reference condition.

Here, in relation to the first reference condition with respect to the first mouse button 1c, the reference intensity refers to a pressure necessary for clicking a mouse button and may be set differently according to properties of a mouse and the reference time refers to a time enough to accept that the first mouse button 1c is operated to transmit a command through the mouse.

Also, when a touch to the second instrument 2 occurs while the first mouse button 1c is operated on the first reference condition, it is determined that the second instrument 2 is operated on the second reference condition and the user interface 43 is operated.

That is, in the embodiment, when the first mouse button 1c is operated while the pointer of the mouse is located in the user interface area, the user interface 43 is operated merely with the touch to the second instrument 2, thereby providing convenience to the user.

Here, it is appropriate that the touch to the second instrument 2 refers to a simple touch with a pressure at a relatively lower level compared with a general pressure applied when the user pressurizes the second mouse button 2c, the mouse wheel 2d, or the mouse touch area portion 2e to transmit the command through the mouse.

Also, in relation to the second reference condition with respect to the second instrument 2, the controller 30 may operate the user interface 43 when the touch to the second instrument 2 additionally occurs as many as a preset reference number or occurs for a reference time.

Here, the reference number may be set as various numerical values according to intentions of the user such as a case of immediately separating after the touch to the second instrument 2 or a case of consecutively touching the second instrument 2.

That is, the second reference condition may be set in various methods including not only a case in which the user touches the second instrument 2 with a finger but also a case of touching once or twice, etc.

Also, the reference time may be set identical to the reference time of the first reference condition with respect to the first instrument push apparatus 1 or may be set as a different time according to intentions of the user.

Also, it is possible to operate on the first reference condition and the second reference condition only using the first mouse button 1c. Here, the first mouse button 1c may be the first instrument push apparatus 1 and may perform an operation on the second reference condition like the second instrument at the same time. When the first mouse button 1c that is the first instrument push apparatus 1 is pressurized (clicked) and the first instrument push apparatus touch portion 24 of the first mouse button 1c is touched, the controller 30 executes a corresponding function corresponding thereto.

Particularly, a mouse including only a single mouse button (not shown) includes a mouse button push sensing portion which senses a push to the single mouse button and a touch sensor which senses a touch to the single mouse button and may operate a corresponding function by determining whether it is operated on the first reference condition and the second reference condition using the single button.

Next, when the corresponding operation portion 40 is the CPU 44, a process of implementing a technology of automatically controlling the corresponding CPU 44 will be described.

In detail, when the pointer of the mouse is located in the user interface area, the controller 30 senses the operation with respect to the first mouse button 1c through the first instrument push sensing portion 11 or the first instrument push apparatus touch portion 24 and senses the operation with respect to the second instrument 2 through the second instrument touch portion 20.

In detail, when the second instrument 2 is operated on the preset second reference condition while the first mouse button 1c is operated on the preset first reference condition, the controller 30 executes a previously designated shortcut command. The shortcut command may include various commands such as changing an activation state of an interface window, activating a text search function in a document, etc.

Here, in relation to whether the first mouse button 1c and the second instrument 2 are operated on the respective reference conditions, the controller 30 may determine like a case in which the corresponding operation portion 40 is the user interface 43.

An operation of the corresponding function according to determination on the operations on the first reference condition and the second reference condition will be replaced by the above description.

Also, it is replaced by the above description to operate on the first reference condition and the second reference condition only using the first mouse button 1c.

Also, in the embodiment, the user interface or the CPU are controlled by sensing intentions of the user to control the computer corresponding to the user device in such a way that various functions may be executed through simple operations of the user.

FIG. 6A is a flowchart illustrating a process of implementing a method of controlling a device according to one embodiment of the present invention, and FIG. 6B is a flowchart illustrating a process of implementing a method of controlling a device according to another embodiment of the present invention.

Referring to FIGS. 6A and 6B, the process of implementing the method of controlling the device according to one embodiment of the present invention will be described. First, the controller 30 senses a speed of a vehicle using a speed sensing portion (S10).

Also, the controller 30 determines whether the vehicle stops, based on a speed of the vehicle, sensed by the speed sensing portion (S20). In detail, the controller 30 determines that the vehicle is stopping when the speed of the vehicle is a preset reference speed or lower.

When it is determined that the vehicle is in a stop-process state of stopping or being stoppable as a result of the determination in the operation S20 described above, the controller 30 senses an operation with respect to the brake pedal 1a through the first instrument push sensing portion 11 or the first instrument push apparatus touch portion 24 (S30).

Particularly, in the embodiment, a pressure to the brake pedal 1a is sensed through the first instrument push sensing portion 11.

Also, the controller 30 determines whether the brake pedal 1a is operated on a preset first reference condition. In detail, when a pedal effort to the brake pedal 1a is maintained at a preset reference intensity or higher or maintained for a reference time, the controller 30 determines that the brake pedal 1a is operated on the first reference condition (S40) or outputs a first sensing command (S42).

Here, in relation to the first reference condition with respect to the brake pedal 1a, the reference intensity means a pedal effort necessary for stopping the vehicle and may be set differently according to properties of the vehicle and the reference time means a time enough to accept that the brake pedal 1a is operated to stop the vehicle.

In the operation S40 or S42, when it is determined that the brake pedal 1a is operated on the first reference condition or the first sensing command is output, the controller 30 senses an operation with respect to the second instrument 2 through the second instrument touch portion 20 (S50).

Particularly, in the embodiment, a touch to the second instrument 2 is sensed through the second instrument touch portion 20.

Also, the controller 30 determines whether the second instrument 2 is operated on a preset second reference condition. In detail, when the touch to the second instrument 2 occurs as many as a preset reference number, the controller 30 determines that the second instrument 2 is operated on the second reference condition (S60) or outputs a second sensing command (S62).

Here, the reference number may be freely set as various numerical values according to intentions of a driver such as a case of immediately separating after the touch to the second instrument 2 or a case of consecutively touching the second instrument 2.

That is, the second reference condition may be set in various methods including not only a case in which the driver touches the second instrument 2 with a foot but also a case of touching once or twice, etc.

In the operation S60 or S62, when it is determined that the second instrument 2 is operated on the second reference condition or the second sensing command is output, the controller 30 operates the parking brake 41 by controlling a parking brake driving portion (S70).

That is, in the embodiment, when a touch of the driver to the second instrument 2 is sensed while the brake pedal 1a is operated to maintain a stop state of the vehicle or to allow the vehicle to enters the stop state, the stop state may be maintained instead of the driver by operating the parking brake 41.

Additionally, in the embodiment, after operating the parking brake 41, the controller 30 may move the brake pedal a to a position relatively downward from a position where the brake pedal 1a is operated using the brake pedal 1a as the display portion 60 or may output various signals informing the operation of the parking brake 41 through an additional display portion 60 (S80).

That is, in the embodiment, when the parking brake 41 is operated to maintain a parking state of the vehicle instead of the driver, the position of the brake pedal 1a may be adjusted or displayed using an additional display method, thereby allowing the driver to recognize that the parking brake 41 is operated.

According to the embodiment, since the parking brake 41 is operated when intentions of the driver to maintain the vehicle in the stop state are sensed, inconvenience to the driver to continuously step on the brake pedal 1a may be eased.

FIG. 7A is a flowchart illustrating a process of implementing a method of controlling a device according to still another embodiment of the present invention, and FIG. 7B is a flowchart illustrating a process of implementing a method of controlling a device according to yet another embodiment of the present invention.

Referring to FIGS. 7A and 7B, a process of implementing a cruise control function using a vehicle pedal according to one embodiment of the present invention will be described. First, the controller 30 senses a speed of a vehicle using a speed sensing portion (S100).

Also, the controller 30 determines whether the cruise control function is operable, based on the speed of the vehicle, sensed by the speed sensing portion (S200). In detail, the controller 30 determines that the cruise control function is operable when the vehicle is driven at a predetermined speed or higher.

That is, since it makes the driver or drivers of other vehicles inconvenient to operate the cruise control function when the speed of the vehicle is too slow, in the embodiment, an operation of the driver is sensed only when the speed of the vehicle reaches a speed at which the cruise control function is operable.

When it is determined that the vehicle is being driven at the predetermined speed or higher as a result of the determination in the operation S20 described above, the controller 30 senses an operation with respect to the accelerator pedal 1b through the first instrument push sensing portion 11 or the first instrument push apparatus touch portion 24 (S300).

Particularly, in the embodiment, a pedal effort to the accelerator pedal 1b is sensed through the first instrument push sensing portion 11.

Also, the controller 30 determines whether the accelerator pedal 1b is operated on a preset first reference condition. In detail, when the pedal effort to the accelerator pedal 1b is maintained at a preset reference intensity or higher or maintained for a reference time, the controller 30 determines that the accelerator pedal 1b is operated on the first reference condition (S400) or outputs a first sensing command (S410).

Here, in relation to the first reference condition with respect to the accelerator pedal 1b, the reference intensity means a pedal effort necessary for accelerating the vehicle and may be set differently according to properties of the vehicle, and the reference time means a time enough to accept that the accelerator pedal 1b is operated to accelerate the vehicle.

In the operation S400 or S410, when it is determined that the accelerator pedal 1b is operated on the first reference condition or the first sensing command is output, the controller 30 senses an operation with respect to the second instrument 2 through the second instrument touch portion 20 (S500).

Particularly, in the embodiment, a touch to the second instrument 2 is sensed through the second instrument touch portion 20.

Also, the controller 30 determines whether the second instrument 2 is operated on a preset second reference condition. In detail, when the touch to the second instrument 2 occurs as many as a preset reference number, the controller 30 determines that the second instrument 2 is operated on the second reference condition (S600) or outputs a second sensing command (S610).

Here, the reference number may be freely set as various numerical values according to intentions of the driver such as a case of immediately separating after the touch to the second instrument 2 or a case of consecutively touching the second instrument 2.

That is, the second reference condition may be set in various methods including not only a case in which the driver touches the second instrument 2 with a foot but also a case of touching once or twice, etc.

In the operation S600 or S610, when it is determined that the second instrument 2 is operated on the second reference condition or the second sensing command is output, the controller 30 operates the cruise control function by controlling the cruise control device 42 (S700).

That is, in the embodiment, when the touch of the driver to the second instrument 2 is sensed while the accelerator pedal 1b is operated to maintain a constant speed of the vehicle, the vehicle may be maintained at the constant speed instead of the driver by operating cruise control function.

Additionally, in the embodiment, after operating the cruise control function, the controller 30 may output a signal informing the operation of the cruise control function through the display portion 60 (S800).

That is, in the embodiment, when the cruise control function is operated to maintain the speed of the vehicle instead of the driver, it is output through the display portion 60 to allow the driver to recognize that the cruise control function is operated. FIG. 8A is a flowchart illustrating a process of implementing a method of controlling a device according to even another embodiment of the present invention, and FIG. 8B is a flowchart illustrating a process of implementing a method of controlling a device according to a further embodiment of the present invention.

Referring to FIGS. 8A and 8B, a process of implementing the method of controlling the device according to even another embodiment will be described. First, the controller 30 senses a pointer of a mouse (S900) and determines whether the pointer of the mouse is located in a previously designated user interface area (S1000).

When it is determined that the pointer of the mouse is located in the user interface area as a result of the determination in the operation S1000 described above, the controller 30 senses an operation with respect to the first mouse button 1c through the first instrument push sensing portion 11 or the first instrument push apparatus touch portion 24 (S1500).

Particularly, in the embodiment, a pressure to the first mouse button 1c is sensed through the first instrument push sensing portion 11.

In detail, when the pressure to the first mouse button 1c is maintained at a preset reference intensity or higher or maintained for a reference time, a touch to the first instrument push apparatus 1 occurs for a reference time, or the pressure to the first mouse button 1 c is maintained at the preset reference intensity or maintained for the reference time and then the touch to the first mouse button 1c, sensed by a first mouse push apparatus touch portion, occurs for the reference time, the controller 30 determines that the first mouse button 1c is operated on a first reference condition (S2000) or outputs a first sensing command (S2100).

In the operation S2000 or S2100, when it is determined that the first mouse button 1c is operated on the first reference condition or the first sensing command is output, the controller 30 senses an operation with respect to the second instrument 2 through the second instrument touch portion 20 (S3000).

Particularly, in the embodiment, a touch to the second instrument 2 is sensed through the second instrument touch portion 20.

Also, the controller 30 determines whether the second instrument 2 is operated on a preset second reference condition (S4000). In detail, when the touch to the second instrument 2 occurs as many as a preset reference number, the controller 30 determines that the second instrument 2 is operated on the second reference condition (S4000) or outputs a second sensing command (S4100).

Here, the reference number may be freely set as various numerical values according to intentions of a driver such as a case of immediately separating after the touch to the second instrument 2 or a case of consecutively touching the second instrument 2.

That is, the second reference condition may be set in various methods including not only a case in which the driver touches the second mouse button 2c, the mouse wheel 2d, or the mouse touch area portion 2e with a body but also a case of touching once or twice, etc.

In the operation S4000 or S4100, when it is determined that the second instrument 2 is operated on the second reference condition or the second sensing command is output, the controller 30 operates a preset corresponding function by controlling the user interface 43 or the CPU 44 (S5000).

That is, in the embodiment, when the user operates the mouse on the preset first reference condition or second reference condition, the preset corresponding function is operated to increase convenience of the user.

In detail, in the operation S5000 described above, when the user interface 43 is controlled, the preset corresponding function may include activating a menu corresponding to an interface area or the contents in the interface area, selecting any one of the activated menu, moving from a first menu to a second menu which are selectable objects among menu items in the activated menu, and canceling a selection to operate or not to operate the menu item in the activated menu.

Also, in the operation S5000 described above, when the CPU 44 is controlled, the preset corresponding function executes a designated shortcut command and the shortcut command may include various commands such as changing an activated interface window or activating or deactivating a text search function of a text editor, etc.

Also, in the embodiment, since it is possible to control various functions of a user device based on a preset operation of the user with respect to an input device such as a mouse, the user's convenience is increased.

In the case of the method of controlling the device according to even another embodiment of the present invention, an operation is performed on the first reference condition and the second reference condition only using the first mouse button 1c of the mouse. Here, the first mouse button 1c may be the first instrument push apparatus 1 and may perform an operation on the second reference condition like the second instrument at the same time. When the first mouse button 1c that is the first instrument push apparatus 1 is pressurized (clicked) and the first instrument push apparatus touch portion 24 of the first mouse button 1c is touched, the controller 30 executes a corresponding function corresponding thereto.

Particularly, a mouse including only a single mouse button includes a mouse button push sensing portion which senses a push to the single mouse button and a touch sensor which senses a touch to the single mouse button and may operate a corresponding function by determining whether it is operated on the first reference condition or the second reference condition using the single button.

While one or more embodiments of the present invention have been described with reference to the figures, which are merely examples, it will be understood by those of ordinary skill in the art that various changes in form and details may be made therein. Therefore, the substantial technical protection scope of the present invention should be determined according to the following claims.

## Claims

1. A device control apparatus comprising:
a first instrument push apparatus and a touch sensing portion operated by an operation of a user; and
a controller which controls an operation of a user device based on operations by the first instrument push apparatus and the touch sensing portion,
wherein the controller outputs sensing commands with respect to the operations on the first instrument push apparatus and the touch sensing portion while outputting a first sensing command by sensing the operation with respect to the first instrument push apparatus and outputting a second sensing command by sensing the operation with respect to the touch sensing portion.

2. The device control apparatus of claim 1, wherein the controller controls a preset corresponding function of a corresponding operation portion included in the user device to be operated when the first sensing command and the second sensing command are output.

3. The device control apparatus of claim 2, comprising a first instrument push sensing portion which senses a push pressure to the first instrument push apparatus,
wherein the controller outputs the first sensing command when the push pressure to the first instrument push apparatus, sensed by the first instrument push sensing portion, is maintained at a preset reference intensity or higher or is maintained for a reference time, and
wherein the controller outputs the second sensing command when the first sensing command is output and then a touch sensed by the touch sensing portion occurs as many as a preset reference number or occurs for a reference time.

4. The device control apparatus of claim 3, comprising a second instrument provided at or connected to the user device,
wherein the touch sensing portion comprises a second instrument touch portion which senses a touch to the second instrument, and
wherein the second sensing command is output when the touch to the second instrument, sensed by the second instrument touch portion, occurs as many as a preset reference number or occurs for a reference time.

5. The device control apparatus of claim 3, wherein the touch sensing portion comprises a first instrument push apparatus touch portion which senses a touch to the first instrument push apparatus, and
wherein the second sensing command is output when the touch to the first instrument push apparatus touch portion, sensed by the first instrument push apparatus touch portion, occurs as many as a preset reference number or occurs for a reference time.

6. The device control apparatus of claim 2, comprising a first instrument push sensing portion which senses a push pressure to the first instrument push apparatus,
wherein the touch sensing portion comprises a first instrument push apparatus touch portion which senses a touch to the first instrument push apparatus,
wherein the controller outputs the first sensing command when the push pressure to the first instrument push apparatus, sensed by the first instrument push sensing portion, is maintained at a preset reference intensity or higher or maintained for a reference time and then the touch to the first instrument push apparatus, sensed by the first instrument push apparatus touch portion, occurs for a reference time, and
wherein the controller outputs the second sensing command when the first sensing command is output and then a touch sensed by the touch sensing portion occurs as many as a preset reference number or occurs for a reference time.

7. The device control apparatus of claim 6, comprising a second instrument provided at or connected to the user device,
wherein the touch sensing portion comprises a second instrument touch portion which senses a touch to the second instrument, and
wherein the second sensing command is output when the touch to the second instrument, sensed by the second instrument touch portion, occurs as many as a preset reference number or occurs for a reference time.

8. The device control apparatus of claim 6, wherein the touch sensing portion comprises a first instrument push apparatus second touch portion which senses a touch to the first instrument push apparatus, and
wherein the second sensing command is output when an additional touch to the first instrument push apparatus, sensed by the first instrument push apparatus second touch portion, occurs as many as a preset reference number or occurs for a reference time.

9. The device control apparatus of claim 2, wherein the touch sensing portion comprises a first instrument push apparatus touch portion which senses a touch to the first instrument push apparatus,
wherein the controller outputs the first sensing command when the touch to the first instrument push apparatus, sensed by the first instrument push apparatus touch portion, occurs for a preset reference time, and
wherein the controller outputs the second sensing command when the first sensing command is output and then a touch sensed by the touch sensing portion occurs as many as a preset reference number or occurs for a reference time.

10. The device control apparatus of claim 9, comprising a second instrument provided at or connected to the user device,
wherein the touch sensing portion comprises a second instrument touch portion which senses a touch to the second instrument, and
wherein the second sensing command is output when the touch to the second instrument, sensed by the second instrument touch portion, occurs as many as a preset reference number or occurs for a reference time.

11. The device control apparatus of claim 9, wherein the touch sensing portion comprises a first instrument push apparatus second touch portion which senses a touch to the first instrument push apparatus, and
wherein the second sensing command is output when the touch sensed by the first instrument push apparatus second touch portion, occurs as many as a preset reference number or occurs for a reference time.

12. The device control apparatus of claim 11, wherein the first instrument push apparatus touch portion and the first instrument push apparatus second touch portion are formed as identical touch portions or separate touch portions.

13. The device control apparatus of claim 3, wherein the controller senses an operation with respect to the touch sensing portion to output the second sensing command when the first sensing command is output.

14. The device control apparatus of claim 2, further comprising a display portion which displays a signal informing an operation of the corresponding function when the preset corresponding function is operated,
wherein the display portion operates when the corresponding function is operated.

15. The device control apparatus of claim 14, wherein the display portion is at least one of electronic devices provided at the first instrument push apparatus, the second instrument, and the user device and an electronic device connected to the user device through wires or wirelessly, and
wherein the signal displayed on the display portion is at least one of a movement, a sound, vibrations, light emission, and visual display.

16. The device control apparatus of claim 4, wherein the user device is a vehicle, the first instrument push apparatus is a brake pedal, and the second instrument comprises at least one of an accelerator pedal, a footrest, a clutch, an overhead console, a door trim, a center fascia, a dashboard, and an instrument mounted on the dash board.

17. The device control apparatus of claim 16, wherein the first instrument push sensing portion which senses to allow the controller to output the first sensing command is a brake pedal sensing portion which senses a push operation to the brake pedal, and
wherein the second instrument touch portion which senses to allow the controller to output the second sensing command comprises a touch sensor which senses a touch to the second instrument.

18. The device control apparatus of claim 17, wherein the corresponding operation portion is a parking brake, an operation of the corresponding function is operating the parking brake by controlling a driving portion of the parking brake, and the corresponding function is operated in a stop-process state in which the vehicle is stopping or stoppable.

19. The device control apparatus of claim 18, wherein the controller determines the stop-process state in which the vehicle is stopping or stoppable when a speed of the vehicle is a preset reference speed or lower.

20. The device control apparatus of claim 18, comprising a display portion which displays a signal informing an operation of the corresponding function,
wherein the controller operates the parking brake,
wherein the display portion which displays the operation of the corresponding function is the brake pedal, and
wherein it is moving the brake pedal to a position relatively downward from a position where the brake pedal is operated that the display portion displays the signal informing the operation of the corresponding function.

21. The device control apparatus of claim 18, wherein when the second sensing command is output due to operating the second instrument while the parking brake is operated, the controller releases the parking brake by controlling the driving portion of the parking brake.

22. The device control apparatus of claim 4, wherein the user device is a vehicle, the first instrument push apparatus is an accelerator pedal, and the second instrument comprises at least one of a brake pedal, a footrest, a clutch, an overhead console, a door trim, a center fascia, a dashboard, and an instrument mounted on the dash board.

23. The device control apparatus of claim 22, wherein the first instrument push sensing portion which senses to allow the controller to output the first sensing command is an accelerator pedal sensing portion which senses a push operation to the accelerator pedal, and
wherein the second instrument touch portion which senses to allow the controller to output the second sensing command comprises a touch sensor which senses a touch to the second instrument.

24. The device control apparatus of claim 23, wherein the corresponding operation portion is a cruise control device, an operation of the corresponding function is operating a cruise control function by controlling a driving portion of the cruise control device, and the corresponding function is operated while the vehicle is driven at a predetermined speed or higher.

25. The device control apparatus of claim 24, wherein the controller reduces a speed of the vehicle when the first sensing command is output due to operating the accelerator pedal after the cruise control function is operated and increases the speed of the vehicle when the second sensing command is output due to operating the second instrument.

26. The device control apparatus of claim 24, wherein the controller increases a speed of the vehicle when the first sensing command is output due to operating the accelerator pedal after the cruise control function is operated and reduces the speed of the vehicle when the second sensing command is output due to operating the second instrument.

27. The device control apparatus of claim 26, wherein the controller controls a level of increasing or reducing the speed of the vehicle to be different based on a number of outputting the first sensing command or the second sensing command.

28. The device control apparatus of claim 23, wherein the controller disables the cruise control function by controlling the driving portion of the cruise control device when the second sensing command is output due to operating the second instrument while the cruise control function is operated.

29. The device control apparatus of claim 4, wherein the user device is a computer and the first instrument push apparatus is a first button of a first device provided at or connected to the computer through wires or wirelessly,
wherein the second instrument is provided at the first device,
wherein the second instrument comprises at least one of a second button, a wheel, and a first device touch area portion that is a designated area of an outside of the first device, which senses a touch, and
wherein the first instrument push sensing portion is a first button push sensing portion which senses a push operation to the first button and the second instrument touch portion comprises a touch sensor which senses a touch to the second instrument.

30. The device control apparatus of claim 4, wherein the user device is a computer and the first instrument push apparatus is a first button of a first device provided at or connected to the computer through wires or wirelessly,
wherein the second instrument is provided at a second device provided at or connected to the computer through wires or wirelessly, separately from the first device,
wherein the second instrument comprises at least one of a second button, a wheel, and a second device touch area portion that is a designated area of an outside of the second device, which senses a touch, and
wherein the first instrument push sensing portion is a first button push sensing portion which senses a push operation to the first button and the second instrument touch portion comprises a touch sensor which senses a touch to the second instrument.

31. The device control apparatus of claim 5, wherein the user device is a computer and the first instrument push apparatus is a first button of a first device provided at or connected to the computer through wires or wirelessly,
wherein the first instrument push apparatus touch portion is provided at the first button, and
wherein the first instrument push sensing portion is a first button push sensing portion which senses a push operation to the first button and the first instrument push apparatus touch portion comprises a touch sensor which senses a touch to the first button that is the first instrument push apparatus.

32. The device control apparatus of claim 7, wherein the user device is a computer and the first instrument push apparatus is a first button of a first device provided at or connected to the computer through wires or wirelessly,
wherein the first instrument push apparatus touch portion is provided at the first button,
wherein the second instrument is provided at the first device,
wherein the second instrument comprises at least one of a second button, a wheel, and a first device touch area portion that is a designated area of an outside of the first device, which senses a touch,
wherein the first instrument push sensing portion is a first button push sensing portion which senses a push operation to the first button and the first instrument push apparatus touch portion comprises a touch sensor which senses a touch to the first button that is the first instrument push apparatus, and
wherein the second instrument touch portion comprises a touch sensor which senses a touch to the second instrument.

33. The device control apparatus of claim 7, wherein the user device is a computer and the first instrument push apparatus is a first button of a first device provided at or connected to the computer through wires or wirelessly,
wherein the first instrument push apparatus touch portion is provided at the first button,
wherein the second instrument is provided at a second device provided at or connected to the computer through wires or wirelessly, separately from the first device,
wherein the second instrument comprises at least one of a second button, a wheel, and a second device touch area portion that is a designated area of an outside of the second device, which senses a touch,
wherein the first instrument push sensing portion is a first button push sensing portion which senses a push operation to the first button and the first instrument push apparatus touch portion comprises a touch sensor which senses a touch to the first button that is the first instrument push apparatus, and
wherein the second instrument touch portion comprises a touch sensor which senses a touch to the second instrument.

34. The device control apparatus of claim 8, wherein the user device is a computer and the first instrument push apparatus is a first button of a first device provided at or connected to the computer through wires or wirelessly,
wherein the first instrument push apparatus touch portion and the first instrument push apparatus second touch portion are provided at the first button, and
wherein the first instrument push sensing portion is a first button push sensing portion which senses a push operation to the first button and the first instrument push apparatus touch portion and the first instrument push apparatus second touch portion comprise touch sensors which sense additional touches to the first button that is the first instrument push apparatus.

35. The device control apparatus of claim 10, wherein the user device is a computer and the first instrument push apparatus is a first button of a first device provided at or connected to the computer through wires or wirelessly,
wherein the first instrument push apparatus touch portion is provided at the first button,
wherein the second instrument is provided at the first device,
wherein the second instrument comprises at least one of a second button, a wheel, and a first device touch area portion that is a designated area of an outside of the first device, which senses a touch,
wherein the first instrument push apparatus touch portion comprises a touch sensor which senses a touch to the first button that is the first instrument push apparatus, and
wherein the second instrument touch portion comprises a touch sensor which senses a touch to the second instrument.

36. The device control apparatus of claim 10, wherein the user device is a computer and the first instrument push apparatus is a first button of a first device provided at or connected to the computer through wires or wirelessly,
wherein the first instrument push apparatus touch portion is provided at the first button,
wherein the second instrument is provided at a second device provided at or connected to the computer through wires or wirelessly, separately from the first device,
wherein the second instrument comprises at least one of a second button, a wheel, and a second device touch area portion that is a designated area of an outside of the second device, which senses a touch,
wherein the first instrument push apparatus touch portion comprises a touch sensor which senses a touch to the first button that is the first instrument push apparatus, and
wherein the second instrument touch portion comprises a touch sensor which senses a touch to the second instrument.

37. The device control apparatus of claim 11, wherein the user device is a computer and the first instrument push apparatus is a first button of a first device provided at or connected to the computer through wires or wirelessly,
wherein the first instrument push apparatus touch portion and the first instrument push apparatus second touch portion are provided at the first button, and
wherein the first instrument push apparatus touch portion and the first instrument push apparatus second touch portion comprise touch sensors which sense additional touches to the first button that is the first instrument push apparatus.

38. The device control apparatus of claim 29, wherein the first device is a mouse and the first button that is the first instrument push apparatus is a first mouse button of the mouse,
wherein the first button push sensing portion is a first mouse button push sensing portion which senses a push to the first mouse button,
wherein the second button is a second mouse button of the mouse, the wheel is a mouse wheel, and the first device touch area portion is a designated area of an outside of the first mouse, which correspond to at least one of the second instrument, and
wherein when the controller determines that the first sensing command is output due to the push operation given to the first mouse button and the second sensing command is output due to a touch operation to the second instrument, the corresponding function is operated.

39. The device control apparatus of claim 30, wherein the first device is a first mouse and the first button that is the first instrument push apparatus is a first mouse button of the first mouse,
wherein the first button push sensing portion is a first mouse button push sensing portion which senses a push to the first mouse button,
wherein the second device is a second mouse separate from the first mouse, wherein the second instrument is provided at the second mouse,
wherein the second button is a second mouse button of the second mouse, the wheel is a mouse wheel of the second mouse, and the second device touch area portion is a designated area of an outside of the second mouse, which correspond to at least one of the second instrument, and
wherein when the controller determines that the first sensing command is output due to the push operation given to the first mouse button, and with this, the second sensing command is output due to a touch operation to the second instrument, the corresponding function is operated.

40. The device control apparatus of claim 31, wherein the first device is a mouse and the first button that is the first instrument push apparatus is a mouse button of the mouse,
wherein the first button push sensing portion is a mouse button push sensing portion which senses a push to the mouse button,
wherein the first instrument push apparatus touch portion provided at the mouse button comprises the touch sensor which senses the touch to the mouse button, and
wherein when the controller determines that the first sensing command is output due to the push operation given to the mouse button, and with this, the second sensing command is output due to a touch operation to the mouse button, the corresponding function is operated.

41. The device control apparatus of claim 32, wherein the first device is a mouse and the first button that is the first instrument push apparatus is a first mouse button of the mouse,
wherein the first button push sensing portion is a first mouse button push sensing portion which senses a push to the first mouse button,
wherein the first instrument push apparatus touch portion provided at the first mouse button comprises the touch sensor which senses a touch to the first mouse button,
wherein the second button is a second mouse button of the mouse, the wheel is a mouse wheel, and the first device touch area portion is a designated area of an outside of the first mouse, which correspond to at least one of the second instrument, and
wherein when the controller determines that the first sensing command is output due to a touch operation after giving the push operation to the first mouse button, and with this, the second sensing command is output due to a touch operation to the second instrument, the corresponding function is operated.

42. The device control apparatus of claim 33, wherein the first device is a first mouse and the first button that is the first instrument push apparatus is a first mouse button of the first mouse,
wherein the first button push sensing portion is a first mouse button push sensing portion which senses a push to the first mouse button,
wherein the first instrument push apparatus touch portion provided at the first mouse button comprises the touch sensor which senses a touch to the first mouse button,
wherein the second device is a second mouse separate from the first mouse, wherein the second instrument is provided at the second mouse,
wherein the second button is a second mouse button of the second mouse, the wheel is a mouse wheel of the second mouse, and the second device touch area portion is a designated area of an outside of the second mouse, which correspond to at least one of the second instrument, and
wherein when the controller determines that the first sensing command is output due to a touch operation after giving the push operation to the first mouse button, and with this, the second sensing command is output due to a touch operation to the second instrument, the corresponding function is operated.

43. The device control apparatus of claim 34, wherein the first device is a mouse and the first button that is the first instrument push apparatus is a mouse button of the mouse,
wherein the first button push sensing portion is a mouse button push sensing portion which senses a push to the mouse button,
wherein the first instrument push apparatus touch portion and the first instrument push apparatus second touch portion provided at the mouse button comprise the touch sensors which sense touches to the mouse button, and
wherein when the controller determines that the first sensing command is output due to a touch operation after giving the push operation to the mouse button, and with this, the second sensing command is output due to additional touch operations to the mouse button, the corresponding function is operated.

44. The device control apparatus of claim 35, wherein the first device is a mouse and the first button that is the first instrument push apparatus is a first mouse button of the mouse,
wherein the first instrument push apparatus touch portion provided at the first mouse button comprises the touch sensor which senses a touch to the first mouse button,
wherein the second button is a second mouse button of the mouse, the wheel is a mouse wheel, and the first device touch area portion is a designated area of an outside of the first mouse, which correspond to at least one of the second instrument, and
wherein when the controller determines that the first sensing command is output due to a touch operation to the first mouse button and the second sensing command is output due to a touch operation to the second instrument, the corresponding function is operated.

45. The device control apparatus of claim 36, wherein the first device is a first mouse and the first button that is the first instrument push apparatus is a first mouse button of the first mouse,
wherein the first instrument push apparatus touch portion provided at the first mouse button comprises the touch sensor which senses a touch to the first mouse button,
wherein the second device is a second mouse separate from the first mouse, wherein the second instrument is provided at the second mouse,
wherein the second button is a second mouse button of the second mouse, the wheel is a mouse wheel of the second mouse, and the second device touch area portion is a designated area of an outside of the second mouse, which correspond to at least one of the second instrument, and
wherein when the controller determines that the first sensing command is output due to a touch operation to the first mouse button, and with this, the second sensing command is output due to a touch operation to the second instrument, the corresponding function is operated.

46. The device control apparatus of claim 37, wherein the first device is a mouse and the first button that is the first instrument push apparatus is a mouse button of the mouse,
wherein the first instrument push apparatus touch portion and the first instrument push apparatus second touch portion provided at the mouse button comprise the touch sensors which sense touches to the mouse button, and
wherein when the controller determines that the first sensing command is output due to a touch operation to the mouse button, and with this, the second sensing command is output due to additional touch operations to the mouse button, the corresponding function is operated.

47. The device control apparatus of claim 46, wherein the corresponding operation portion is a user interface and an operation of the corresponding function is operating a menu corresponding to an interface area or contents in the interface area.

48. The device control apparatus of claim 47, wherein the operation of the menu is activating the menu corresponding to the interface area or the contents in the interface area.

49. The device control apparatus of claim 47, wherein the operation of the menu is selecting any one of the activated menu corresponding to the interface area or the contents in the interface area.

50. The device control apparatus of claim 47, wherein the operation of the menu is moving from a first menu to a second menu, which are selectable from selective items in the activated menu in the interface area.

51. The device control apparatus of claim 47, wherein the operation of the menu is selecting a selective item in the activated menu in the interface area to be operable or canceling the selecting not to be operable.

52. The device control apparatus of claim 46, wherein the corresponding operation portion is a central processing unit (CPU) and the operating of the corresponding function is controlling the user device by operating the CPU.

53. The device control apparatus of claim 52, wherein an operation command of the corresponding operation portion is executing a designated shortcut command.

54. The device control apparatus of claim 52, wherein the designated shortcut command is activating or deactivating a user interface window or a designated function of a user program.

55. The device control apparatus of claim 54, wherein the designated function of the user program is a text search function of a text editor.

56. The device control apparatus of claim 52, wherein the controller operates the CPU that is the corresponding operation portion, and
wherein displaying the operation of the corresponding function on the display portion is performed by operating a light source provided at all or part of the display portion.

57. The device control apparatus of claim 37, wherein the touch sensor is embodied as at least one of a resistive film type, a pressure sensing type, an electrostatic type, a heat detection type, a motion detection type, and an optical type.

58. A device control apparatus comprising:
a first instrument pedal and a second instrument operated by an operation of a foot of a driver;
a controller which controls an operation of a vehicle based on a pressure or a touch to the first instrument pedal and the second instrument;
a first instrument pedal sensing portion which senses an operation with respect to the first instrument pedal; and
a second instrument touch portion which senses an operation with respect to the second instrument,
wherein the first instrument pedal comprises a brake pedal, the second instrument comprises at least one of an accelerator pedal, a footrest, and a clutch, the first instrument pedal sensing portion comprises a brake pedal sensing portion which senses an operation with respect to the brake pedal, the second instrument touch portion comprises a touch sensor which senses a touch to the accelerator pedal, the footrest, or the clutch, and the controller operates a parking brake by controlling a parking brake driving portion and moves the brake pedal to a position relatively downward from an operation position after operating the parking brake when the brake pedal is operated on a preset first reference condition and the accelerator pedal, the footrest, or the clutch is operated on a preset second reference condition while the vehicle stops.

59. The device control apparatus of claim 58, wherein the first instrument pedal sensing portion senses a pedal effort to the first instrument pedal and the second instrument touch portion senses a touch to the second instrument.

60. The device control apparatus of claim 59, wherein the controller determines that the first instrument pedal is operated on the first reference condition when the pedal effort to the first instrument pedal is maintained at a reference intensity or higher or maintained for a reference time and determines that the second instrument is operated on the second reference condition when the touch to the second instrument occurs as many as a preset reference number or occurs for a reference time.

61. The device control apparatus of claim 58, wherein when it is determined that the first instrument pedal is operated on the first reference condition, the controller senses the operation with respect to the second instrument through the second instrument touch portion.

62. The device control apparatus of claim 58, wherein the second instrument touch portion comprises a touch sensor mounted on a top of the second instrument and the touch sensor is embodied as a resistive film type, a pressure sensing type, an electrostatic type, a heat detection type, or an optical type.

63. The device control apparatus of claim 58, wherein the controller determines that the vehicle stops when a speed of the vehicle is a preset reference speed or lower.

64. A device control apparatus comprising:
a first instrument pedal and a second instrument operated by an operation of a foot of a driver;
a controller which controls an operation of a vehicle based on a pressure or a touch to the first instrument pedal and the second instrument;
a first instrument pedal sensing portion which senses an operation with respect to the first instrument pedal; and
a second instrument touch portion which senses an operation with respect to the second instrument,
wherein the first instrument pedal comprises an accelerator pedal, the second instrument comprises at least one of a brake pedal, a footrest, and a clutch, the first instrument pedal sensing portion comprises an accelerator pedal sensing portion which senses an operation with respect to the accelerator pedal, the second instrument touch portion comprises a touch sensor which senses a touch to the brake pedal, the footrest, or the clutch, and the controller controls to operate a preset corresponding function when the second instrument is operated on a preset second reference condition while the operation with respect to the first instrument pedal is performed on a preset first reference condition.

65. The device control apparatus of claim 64, wherein the controller operates a cruise control function by controlling a cruise control driving portion when the accelerator pedal is operated on the first reference condition and the brake pedal, the footrest, or the clutch is operated on the second reference condition while the vehicle is driven at a predetermined speed or higher.

66. The device control apparatus of claim 65, further comprising a first instrument pedal touch portion which senses a touch to the first instrument pedal,
wherein after operating the cruise control function, the controller reduces the speed of the vehicle when the touch to the first instrument pedal is sensed by the first instrument pedal touch portion and increases the speed of the vehicle when the touch to the second instrument is sensed by the second instrument touch portion.

67. The device control apparatus of claim 65, further comprising a first instrument pedal touch portion which senses a touch to the first instrument pedal,
wherein after operating the cruise control function, the controller increases the speed of the vehicle when the touch to the first instrument pedal is sensed by the first instrument pedal touch portion and reduces the speed of the vehicle when the touch to the second instrument is sensed by the second instrument touch portion.

68. The device control apparatus of claim 67, wherein the controller controls a level of increasing or reducing the speed of the vehicle to be different based on a number of the touches to the first instrument pedal or the second instrument.

69. The device control apparatus of claim 64, further comprising an output portion which outputs a signal informing an operation of the corresponding function when the preset corresponding function is operated.

70. A device control apparatus comprising:
a first instrument pedal and a second instrument operated by an operation of a foot of a driver; and
a controller which controls an operation of a vehicle based on a pressure or a touch to the first instrument pedal and the second instrument.

71. A control system provided with a device control function, comprising:
a first instrument push apparatus and a touch sensing portion; and
a controller which controls an operation of a user device based on operations with respect to the first instrument push apparatus and the touch sensing portion,
wherein the controller outputs sensing commands with respect to the operations with respect to the first instrument push apparatus and the touch sensing portion,
wherein a first sensing command is output by sensing the operation with respect to the first instrument push apparatus, and
wherein a second sensing command is output by sensing the operation with respect to the touch sensing portion.

72. The control system of claim 71, wherein the controller controls a preset corresponding function of a corresponding operation portion included in the user device to be operated when the first sensing command and the second sensing command are output.

73. The control system of claim 72, comprising a first instrument push sensing portion which senses a push pressure to the first instrument push apparatus,
wherein the controller outputs the first sensing command when the push pressure to the first instrument push apparatus, sensed by the first instrument push sensing portion, is maintained at a preset reference intensity or higher or is maintained for a reference time and
wherein the controller outputs the second sensing command when the first sensing command is output and then a touch sensed by the touch sensing portion occurs as many as a preset reference number or occurs for a reference time.

74. The control system of claim 72, comprising a first instrument push sensing portion which senses a push pressure to the first instrument push apparatus,
wherein the touch sensing portion comprises a first instrument push apparatus touch portion which senses a touch to the first instrument push apparatus,
wherein the controller outputs the first sensing command when the push pressure to the first instrument push apparatus, sensed by the first instrument push sensing portion, is maintained at a preset reference intensity or higher or maintained for a reference time and then the touch to the first instrument push apparatus, sensed by the first instrument apparatus touch portion, occurs for a reference time, and
wherein the controller outputs the second sensing command when the first sensing command is output and then a touch sensed by the touch sensing portion occurs as many as a preset reference number or occurs for a reference time.

75. The control system of claim 72, wherein the touch sensing portion comprises a first instrument push apparatus touch portion which senses a touch to the first instrument push apparatus,
wherein the controller outputs the first sensing command when the touch to the first instrument push apparatus, sensed by the first instrument push apparatus touch portion, occurs for a preset reference time, and
wherein the controller outputs the second sensing command when the first sensing command is output and then a touch sensed by the touch sensing portion occurs as many as a preset reference number or occurs for a reference time.

76. A computer readable medium in which a program which outputs a first sensing command by sensing an operation with respect to a first instrument push apparatus, outputs a second sensing command by sensing an operation with respect to a touch sensing portion, and controls an operation of a user device based on the operation with respect to the first instrument push apparatus and the operation with respect to the touch sensing portion is recorded.

77. The computer readable medium of claim 76, wherein a program which controls a preset corresponding function of a corresponding operation portion included in the user device to be operated when the first sensing command and the second sensing command are output is recorded.

78. A method of controlling a device, comprising:
outputting a first sensing command by sensing an operation with respect to a first instrument push apparatus;
outputting a second sensing command by sensing an operation with respect to a touch sensing portion; and
controlling an operation of a user device based on the operation with respect to the first instrument push apparatus and the operation with respect to the touch sensing portion.

79. The method of claim 78, comprising controlling a preset corresponding function of a corresponding operation portion included in the user device to be operated when the first sensing command and the second sensing command are output.

80. The method of claim 79, comprising a first instrument push sensing portion which senses a push pressure to the first instrument push apparatus,
wherein in the outputting of the first sensing command, the first sensing command is output when the push pressure to the first instrument push apparatus, sensed by the first instrument push sensing portion, is maintained at a preset reference intensity or higher or is maintained for a reference time, and
wherein in the outputting of the second sensing command, the second sensing command is output when the first sensing command is output and then a touch sensed by the touch sensing portion occurs as many as a preset reference number or occurs for a reference time.

81. The method of claim 79, comprising a first instrument push sensing portion which senses a push pressure to the first instrument push apparatus,
wherein the touch sensing portion comprises a first instrument push apparatus touch portion which senses a touch to the first instrument push apparatus,
wherein in the outputting of the first sensing command, the first sensing command is output when the push pressure to the first instrument push apparatus, sensed by the first instrument push sensing portion, is maintained at a preset reference intensity or higher or maintained for a reference time and then the touch to the first instrument push apparatus, sensed by the first instrument push apparatus touch portion, occurs for a reference time, and
wherein in the outputting of the second sensing command, the second sensing command is output when the first sensing command is output and then a touch sensed by the touch sensing portion occurs as many as a preset reference number or occurs for a reference time.

82. The method of claim 79, wherein the touch sensing portion comprises a first instrument push apparatus touch portion which senses a touch to the first instrument push apparatus,
wherein in the outputting of the first sensing command, the first sensing command is output when the touch to the first instrument push apparatus, sensed by the first instrument push apparatus touch portion, occurs for a reference time, and
wherein in the outputting of the second sensing command, the second sensing command is output when the first sensing command is output and then a touch sensed by the touch sensing portion occurs as many as a preset reference number or occurs for a reference time.

83. A method of controlling a device, comprising:
determining, by a controller, whether a vehicle stops based on a speed of the vehicle, sensed by a speed sensing portion;
sensing an operation with respect to a first instrument pedal through a first instrument pedal sensing portion when the vehicle stops;
sensing an operation with respect to a preset second instrument using a second instrument touch portion when the first instrument pedal is operated on a preset first reference condition; and
controlling a preset corresponding function to be operated when the second instrument is operated on a preset second reference condition,
wherein the first instrument pedal comprises a brake pedal, the second instrument comprises at least one of an accelerator pedal, a footrest, and a clutch, the first instrument pedal sensing portion comprises a brake pedal sensing portion which senses an operation with respect to the brake pedal, the second instrument touch portion comprises a touch sensor which senses a touch to the accelerator pedal, the footrest, or the clutch, and
wherein in the controlling of the preset corresponding function to be operated, the controller operates a parking brake by controlling a parking brake driving portion and then moves the brake pedal to a position relatively downward from an operation position when the brake pedal is operated on the first reference condition and the accelerator pedal, the footrest, or the clutch is operated on the second reference condition.

84. The method of claim 83, wherein the first instrument pedal sensing portion senses a pedal effort to the first instrument pedal and the second instrument touch portion senses a touch to the second instrument.

85. The method of claim 83, wherein the controller determines that the first instrument pedal is operated on the first reference condition when the pedal effort to the first instrument pedal is maintained at a reference intensity or higher or maintained for a reference time and determines that the second instrument is operated on the second reference condition when the touch to the second instrument touch portion occurs as many as a preset reference number or occurs for a reference time.

86. A method of controlling a device, comprising:
sensing, by a controller, an operation with respect to a first instrument pedal using a first instrument pedal sensing portion;
sensing an operation with respect to a preset second instrument using a second instrument touch portion when the first instrument pedal is operated on a preset first reference condition; and
controlling a preset corresponding function to be operated when the second instrument is operated on a preset second reference condition,
wherein the first instrument pedal comprises an accelerator pedal, the second instrument comprises at least one of a brake pedal, a footrest, and a clutch, the first instrument pedal sensing portion comprises an accelerator pedal sensing portion which senses an operation with respect to the accelerator pedal, and the second instrument touch portion comprises a touch sensor which senses a touch to the brake pedal, the footrest, or the clutch.

87. The method of claim 86, further comprising, before the sensing of the operation with respect to the first instrument pedal, determining whether a speed of a vehicle, sensed by a speed sensing portion, is a predetermined speed or higher.

88. The method of claim 87, wherein in the controlling of the preset corresponding function to be operated, the controller operates a cruise control function by controlling a cruise control driving portion when the accelerator pedal is operated on the first reference condition and the brake pedal, the footrest, or the clutch is operated on the second reference condition while the vehicle is driven at the predetermined speed or higher.

89. The method of claim 88, wherein after operating the cruise control function, the controller reduces the speed of the vehicle when a touch to the first instrument pedal is sensed and increases the speed of the vehicle when a touch to the second instrument is sensed.

90. The method of claim 88, wherein after operating the cruise control function, the controller increases the speed of the vehicle when a touch to the first instrument pedal is sensed and reduces the speed of the vehicle when a touch to the second instrument is sensed.

91. The method of claim 90, wherein the controller controls a level of increasing or reducing the speed of the vehicle to be different based on a number of the touches to the first instrument pedal or the second instrument.

92. The method of claim 86, further comprising outputting a signal informing an operation of the corresponding function after controlling the preset corresponding function to be operated.

93. A method of controlling a device, comprising:
sensing, by a controller, an operation with respect to a first instrument pedal using a first instrument pedal sensing portion;
sensing an operation with respect to a preset second instrument using a second instrument touch portion when the first instrument pedal is operated on a preset first reference condition; and
controlling a preset corresponding function to be operated when the second instrument is operated on a preset second reference condition.
